Europäisches Patentamt

European Patent Office

Office européen des brevets

(11) Veröffentlichungsnummer: **0 288 733 B1**

(12) # EUROPÄISCHE PATENTSCHRIFT

(45) Veröffentlichungstag der Patentschrift: **25.11.92**

(51) Int. Cl.⁵: **B29C 51/36**, B29C 51/42, B29C 33/38

(21) Anmeldenummer: **88104514.0**

(22) Anmeldetag: **22.03.88**

(54) **Verfahren und Vorrichtung zur Herstellung von Formteilen oder Gegenständen aus thermoverformbaren Kunsttoffolien, thermoverformbaren kunststoffhaltigen Bahnen oder Kunststoffplatten.**

(30) Priorität: **30.04.87 DE 3714366**
**30.04.87 DE 3714367**

(43) Veröffentlichungstag der Anmeldung:
**02.11.88 Patentblatt 88/44**

(45) Bekanntmachung des Hinweises auf die Patenterteilung:
**25.11.92 Patentblatt 92/48**

(84) Benannte Vertragsstaaten:
**AT BE CH DE ES FR GB GR IT LI LU NL SE**

(56) Entgegenhaltungen:
**EP-A- 0 121 929      DE-A- 1 963 573**
**DE-A- 3 132 437      DE-A- 3 231 188**
**DE-B- 1 132 320      GB-A- 2 167 014**

(73) Patentinhaber: **ALKOR GMBH KUNSTSTOFFE**
**Morgensternstrasse 9 Postfach 71 01 09**
**W-8000 München 71(DE)**

(72) Erfinder: **Landler, Josef, Chem. Ing.**
**Schiesstättstrasse 84**
**W-8190 Wolfratshausen(DE)**

(74) Vertreter: **Seiler, Siegfried**
**Langhansstrasse 6**
**W-5650 Solingen 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 288 733 B1

**Beschreibung**

Die vorliegende Erfindung betrifft ein Verfahren und eine Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren entsprechend den Methoden der Oberbegriffe der unabhängigen Ansprüche. Die vorzugsweise eingespannte oder vorgespannte emissionsarme Kunststoffolie, kunststoffhaltige Bahn oder Kunststoffplatte wird mittels der Vorrichtung und des Verfahrens unter Mitverwendung eines Druckunterschiedes und unter Erwärmung in die Negativtiefziehform eingebracht und in der Negativtiefziehform verformt, wobei die Kunststoffolie, kunststoffhaltige Bahn oder Kunststoffplatte unter Verwendung spezieller Negativtiefziehformen unter Narbgebung und/oder Oberflächendekoration und unter Einhaltung bestimmter Temperaturdifferenz verformt werden.

Aus der gattungsbildenden DE-A-32 31 188 ist bereits ein Kunststoffverarbeitungswerkzeug zur Bearbeitung thermoplastischer Massen mit einer formgebenden Oberfläche sowie mit einer daran festhaftenden Schicht aus körnigem, kugel- oder linsenförmigen Material mit einer Schichtdicke von 0,05 bis 1 mm, vorzugsweise 0,08 bis 0,03 mm, bekannt. Das Kunststoffverarbeitungswerkzeug ist nicht auf ein spezielles Verfahren spezialisiert sondern sowohl für das Hohlkörperblasformen, Tiefziehen, als auch das Warmpressen einsetzbar.

Da die genannten Verfahren eine Vielzahl unterschiedlichster Verfahrensmaßnahmen aufweisen müssen, so z.B. Warmpressen, Blasen, Tiefziehen unter den unterschiedlichsten Bedingungen, sind in diesem Zusammenhang keine bestimmten allgemein anwendbaren Verfahrensmaßnahmen festgelegt.

Aus der GB-A-21 67 014 ist eine poröse Formoberfläche aufweisende Tiefziehform bekannt, die nach elektrochemischen Verfahren hergestellt ist und ebenfalls eine Vielzahl feiner Poren, die gleichmäßig über die ganze Oberfläche verteilt sind, aufweist. Die Kunstharzfolie wird gegen diese Formoberfläche gepreßt und verformt.

Arbeitet man jedoch mit derartigen Tiefziehformen, die eine Vielzahl feinster Poren in der Oberfläche aufweisen, so tritt je nach Anzahl der Arbeitstakte, Produktion und dergleichen eine Verstopfung der Poren oder Mikroporen auf. Die Oberflächenreproduktionen oder Oberflächenstrukturierungen verschlechtern sich und die Anlegung eines Vakuums stößt auf Schwierigkeiten, so daß der Ausbau des Werkzeuges, dessen Reinigung oder der Einsatz eines neuen entsprechenden Werkzeuges erforderlich wird.

Ziel und Aufgabe der vorliegenden Erfindung war es, an sich bekannte Negativtiefziehverfahren und die Negativtiefziehvorrichtungen zu verbessern. Insbesondere sollte eine genaue Oberflächenreproduktion der gewünschten Oberflächenstrukturierungen und/oder Oberflächendekorierungen auch mit Folien, Bahnen oder Kunststoffplatten ermöglicht werden. Weiterhin sollten spannungsarme Formteile mit Hilfe des Verfahrens und der Vorrichtung hergestellt werden können. Die verformten Kunststoffbahnen, Platten und dgl. sollten auch noch hinsichtlich ihrer Narbung oder Oberflächenstrukturierung eine gute Temperaturbeständigkeit aufweisen.

Erfindungsgemäß wurde festgestellt, daß diesen Zielen und Aufgaben ein Verfahren und eine Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren gerecht werden, bei dem bzw. bei den die vorzugsweise eingespannte oder vorgespannte Kunststoffolie, kunststoffhaltige Bahn oder Kunststoffplatte unter Erwärmung in die Negativtiefziehform eingebracht und unter Narbgebung und/oder Oberflächendekoration unter Verwendung einer eine poröse, luftdurchlässige, vorzugsweise mikroporöse luftdurchlässige Formoberfläche aufweisenden Negativtiefziehform verformt wird, die eine metall-, metallegierungs-, mikrometallpartikelhaltige, keramik-metall-und/oder keramikmikrometallpartikelhaltige Schicht oder Oberfläche mit einer - durchschnittlichen Metallschichtdicke oder Metallpartikeldicke unter 80 $\mu$m aufweist. Gemäß der Erfindung wird die eingespannte oder vorgespannte Kunststoffolie, kunststoffhaltige Bahn oder Kunststoffplatte unter Mitverwendung eines Druckunterschiedes in die Negativtiefziehform eingebracht wird, wobei eine emissionsarme Kunststoffolie, kunststoffhaltige Bahn oder Kunststoffplatte verwendet wird, bei der der Gesamtgehalt der bei der Verformungstemperatur und Verflüchtigungszeit flüchtigen Bestandteile kleiner als 3 Gew.-% beträgt, wobei zwischen dem kälteren Werkzeug und der Kunststoffolie, kunststoffhaltigen Bahn oder Kunststoffplatte ein Temperaturunterschied von mehr als 30 °C eingehalten und nach der Thermoverformung abgekühlt wird.

Die Kunststoffolie, kunststoffhaltige Bahn oder Kunststoffplatte wird vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 260 °C aufgeheizt, während die Werkzeugtemperatur um mehr als 30 °C, vorzugsweise um mehr als 80 °C, unter dem Schmelzpunkt, dem Schmelzbereich oder der Schmelztemperatur oder Erweichungstemperatur der Kunststoffolie, kunststoffhaltigen Bahn oder Kunststoffplatte eingestellt wird.

2

Gemäß dem erfindungsgemäßen Verfahren werden dünne Folien mit einer Dicke von 100 bis 1400 $\mu$m, vorzugsweise 200 bis 1000 $\mu$m, unter Narb- und/oder Dekorgebung im Negativtiefziehverfahren verformt. Es gelingt mit Hilfe des erfindungsgemäßen Verfahrens eine Narbstabilität auch bei Wärmeeinwirkung zu erreichen.

Nach einer bevorzugten Ausführungsform des erfindungsgemäßen Verfahrens werden Folien mit einer Shore-D-Härte von 20 bis 60, vorzugsweise 25 bis 40, unter Narb-und/oder Dekorgebung im Negativtiefziehverfahren verformt.

Nach einer weiteren bevorzugten Ausführungsform des erfindungsgemäßen Verfahrens werden die Kunststoffolien mit einem wärmestabilen Polyolefin-, vorzugsweise Polypropylenschaum, mit einer Schaumschichtdicke von 0,5 bis 10 mm, vorzugsweise 1,5 bis 5 mm, laminiert oder versehen, bevor sie in der Negativtiefziehform dreidimensional verformt und die Folienoberflächen genarbt und/oder oberflächenstrukturiert werden, wobei gegebenenfalls die Schaumschicht mit einem Träger oder einer Trägerschicht hinterlegt wird.

Die Kunststoffolie wird nach einer Ausführungsform nach der dreidimensionalen Verformung, Narbung und/oder Oberflächenstrukturierung in dem Werkzeug nach oder während der Abkühlung entweder in der Form selbst oder in einem getrennten Arbeitsgang und/oder in einer anderen Form mit einem weichen bis mittelharten Schaum, vorzugsweise Polyurethanschaum, hinterschäumt, wobei gegebenenfalls bei der Hinterschäumung zusätzlich ein Träger oder eine Trägerschicht eingelegt wird.

Im Unterschied zu dem Positivtiefziehverfahren kann das erfindungsgemäße Verfahren verschiedene Muster des Urmodells wiedergeben, so z.B. zwei oder mehrere Arten von Narben, Ziernähte, Buchstaben, Design, Knöpfe und/oder Holznarben oder anderen Strukturierungen.

Die verwendbaren Kunststoffbänder, -folien oder Platten bestehen aus an sich bekannten Kunststoffen, vorzugsweise aus geschäumten Kunstleder, PVC-Schaum oder Polyolefin-Schaumlaminaten oder sind nicht geschäumte Folien, Bänder oder Platten.

Sie werden direkt oder in einem weiteren Arbeitsgang mit einem steifen Träger hinterlegt, wodurch Produkte mit weichem Griff und genaue Wiedergaben von Oberflächenstrukturen erreicht werden.

Mit Hilfe des erfindungsgemäßen Verfahrens gelingt es, verschiedenfarbige Materialien zu verformen, z.B. Folien mit Wolkendruck, Design und dgl.

Der Zeitaufwand für die Formherstellung ist kürzer gegenüber dem Verfahren "Slush-Moulding".

Im Rahmen des erfindungsgemäßen Verfahrens werden im Negativtiefziehverfahren Kunststoffolien, kunststoffhaltige Bahnen oder Kunststoffplatten verformt, die aus Kunststoff, einer Kunststoffmischung oder Kunststofflegierung und bezogen auf 100 Gew.-Teile Kunststoff, Kunststoffmischung oder Kunststofflegierung 0,01 bis 15 Gew.-Teile, vorzugsweise 0,1 bis 6 Gew.-Teile, Verarbeitungshilfsmittel, sowie gegebenenfalls zusätzlich Füllstoffe, Farbpigmente, Farbstoffe oder anderen Zusatzstoffen bestehen oder diese enthalten.

Dabei werden im Negativtiefziehverfahren emissionsarme Kunststoffolien, kunststoffhaltige Bahnen oder Kunststoffplatten verformt, wobei der Gesamtgehalt der bei der Verformungstemperatur und Verformungszeit flüchtigen Bestandteile, vorzugsweise kleiner als 2 Gew.-% ist.

Durch diese Ausführungsform wird sichergestellt, daß die poröse, vorzugsweise mikroporöse Negativtiefziehform funktionsfähig bleibt und eine nicht gewünschte Verstopfung der Mikroporen weitgehend vermieden wird.

Der Kunststoff, die Kunststoffmischung oder Kunststofflegierung der emissionsarmen Kunststoffolien, kunststoffhaltigen Bahnen oder Kunststoffplatten besteht bevorzugt aus Vinylchloridhomo- oder -copolymerisat, vorzugsweise in Kombination mit einem plastifizierenden und/oder elastomermodifizierten Thermoplasten, aus einem Olefinhomo- und/oder -copolymerisat, chlorierten Polyethylen, Ethylen-Propylen-Copolymerisat (EPM), Ethylen-Propylen-Dien-Polymerisat (EPDM), thermoplastischen Polyester, thermoplastische Polyurethan, kautschukartigen Polyesterurethan und/oder Polyvinylidenfluorid oder enthält einen dieser Kunststoffe als Bestandteil.

Der Kunststoff, die Kunststoffmischung oder die Kunststofflegierung besteht nach einer bevorzugten Ausführungsform aus Vinylchloridhomo- oder -copolymerisat und aus plastifizierenden und/oder elastomermodifizierten Thermoplasten, vorzugsweise Ethylen-Vinylacetat-Copolymerisat (insbesondere mit einem Acetatgehalt von größer als 60 Gew.-%) Ethylen-Vinylacetat- Kohlenmonooxid-Terpolymerisat (Elvaloy), einem thermoplastischen Kautschuk, vorzugsweise Ethylen-Propylen-Copolymerisat (EPM) und/oder Ethylen-Propylen-Dien-Terpolymerisat (EPDM), einem Kautschuk auf der Basis von Styrolpolymerisat oder Styrolblockpolymerisaten, chloriertem Polyethylen, thermoplastischem Polyurethan, thermoplastische Polyesterharze, Olefinelastomer, Acrylat- und/oder Methacrylathomoco- und -pfropfpolymerisate, Nitrilkautschuk, Methylbutadien-Styrol-Polymerisat (MBS) sowie gegebenenfalls andere Modifizierungsmittel, vorzugsweise Styrol-Acrylnitril-Copolymerisate (SAN), Acrylnitril-Butadienharz (NBA), Acrylnitril-Butadien-Copolymerisat (ABS), Acrylnitril-Acrylatharz (NAR), ASA, AEN, ABS und/oder MABS Methylmethacrylat, Butadien-Styrol-Maleinsäure-Terpolymerisat, Mischungen mit Adipatcarbonsäuremischestern und/oder aliphatische oder aromatische Carbonsäureester oder höheren Dicarbonsäureestern, vorzugsweise Trimellithsäureester, Adipaten usw. oder enthält einen oder mehrere dieser Modifizierungsmittel.

Nach einer bevorzugten Ausführungsform wird die Kunststoffolie, die kunststoffhaltige Bahn oder die Kunststoffplatte unter Mitverwendung eines Stempels oder einer ähnlichen Vorrichtung vorgeformt, wobei der Stempel die Form oder Formteilbereiche der Negativtiefziehform (in Positivform) aufweist. Zusammen mit der vorgenannten Temperatureinstellung der Kunststoffolie, -bahn oder Platte und der Negativtiefziehform und der mikroporösen Form und Formoberfläche gelingt es so spannungsarme und/oder weitgehend temperaturbeständige strukturierte Kunststofffolien, -bahnen und Platten zu erhalten.

Nach einer weiteren bevorzugten Ausführungsform wird die gegebenenfalls eingespannte oder vorgespannte Kunststoffbahn unter Mitverwendung eines Druckunterschiedes und unter Erwärmung in die Negativtiefziehform eingebracht und in der Negativtiefziehform verformt, wobei die in die Negativtiefziehform eingebrachte Kunststoffbahn durch die strukturierte, poröse und luftdurchlässige Oberfläche des Negativtiefziehwerkzeuges in der Oberfläche bzw. auf der Oberflächenschicht während der Thermoverformung strukturiert und/oder genarbt und nachfolgend oder gleichzeitig von der (nicht mit der Negativtiefziehform in Kontakt oder Verbindung stehenden) Rückseite der Kunststoffbahn her ein Behandlungsmittel auf die Kunststoffbahn aufgebracht wird.

Nach einer bevorzugten Ausführungsform des erfindungsgemäßen Verfahrens ist das Behandlungsmittel eine Kühlflüssigkeit oder ein kaltes Gas, das die in der Negativtiefziehform befindliche Kunststoffbahn auf die Entformungstemperatur oder in die Nähe der Entformungstemperatur abkühlt oder schockkühlt. Dadurch gelingt es, die erzielten Narben und Strukturen auch im Mikrobereich zu erhalten, bei der Entformung in ihrer Form kaum zu beeinträchtigen, kürzere Arbeitstakte zu erzielen und unter anderem auch verformte Gegenstände oder Formteile mit verbesserten Eigenschaften zu erhalten.

Nach einer weiteren Ausführungsform wird als Behandlungsmittel ein Haftvermittler, vorzugsweise eine Haftvermittlerflüssigkeit oder eine einen Haftvermittler enthaltende Flüssigkeit, ein Klebstoff, eine im Sprühverfahren aufzubringende Kunststoffschicht und/oder eine Sperrschicht, vorzugsweise eine als Flüssigkeit oder als Flüssigkeitsgemisch aufzubringende Sperrschicht, verwendet. Als Sperrschicht werden bevorzugt kunststoffhaltige Flüssigkeiten eingesetzt, vorzugsweise Flüssigkeiten mit mindestens einem Polyacryl-, Polymethacrylsäureester, unvernetztem oder vernetztem Polyurethan, Vinylchloridhomo-, -copolymerisat, -pfropfpolymerisat, vorzugsweise Vinylchloridcopolymerisat mit Polyvinylacetat oder Polyvinylbutyral; Vinylidenhalogenidhomo-oder -copolymerisat, vorzugsweise Vinylidenchlorid oder Polyvinylidenfluorid; Olefincopolymerisat, Polyamid, kautschukartigen Terpolymerisat aus Ethylen, Propylen und einem Dien (EPDM), kautschukartigen Ethylen-Propylen-Mischpolymerisat (EPM), chloriertem Polyethylen, Polyacrylnitril oder aus einem Fluorpolymeren, vorzugsweise Polytetrafluorethylen, mindestens einem Lösungs- und/oder Verdünnungsmittel und/oder Emulgator und/oder Netzmittel und/oder Weichmacher, sowie gegebenenfalls Zusatz- und/oder Verarbeitungshilfsmittel.

Die Sperrschicht verhindert u.a., daß ungünstige Wechselwirkungen zwischen den Bestandteilen des Schaumes oder der Hinterschäumung (z.B. Polyurethanschaum) und der Kunststoffbahn auftreten.

Die Sperrschicht wird in einer Dicke von 1 $\mu$m bis 400 $\mu$m, vorzugsweise 350 $\mu$m, aufgetragen. Dabei wird die Sperrschicht in Form einer Verdünnungsmittel enthaltenden Dispersion oder Lösung aufgetragen, die vorzugsweise organisch-chemische kunststofflösende oder -anquellende chemische kunststofflösende oder -anquellende Lösungsmittel und/oder Weichmacher und/oder Wasser als Verdünnungsmittel enthält oder daraus entsteht. Nach einer bevorzugten Ausführungsform werden auch diese Flüssigkeiten (Haftvermittler für Klebschicht und/oder für Sperrschicht) mit zur Abkühlung der in der Negativtiefziehform befindlichen verformten Kunststoffbahn benutzt.

Als Haftvermittler werden die an sich für die jeweils eingesetzten Kunststoffe bekannten Haftvermittler verwendet, vorzugsweise Ethylen-Vinylacetat-Copolymerisat, Ethylen-Vinylacetat-Kohlenmonoxid-Terpolymerisat, Ethylen-Acrylsäureester-Copolymerisat, wobei auch in diesen Fällen Lösungen, Dispersionen oder ähnliche Flüssigkeiten zum Aufbringen der Haftvermittler eingesetzt werden, die gegebenenfalls Lösungs- oder Verdünnungsmittel, Weichmacher und andere Zusatzmittel enthalten.

Das flüssige Behandlungsmittel wird auf die Rückseite der in der Negativtiefziehform befindlichen thermoverformten Kunststoffbahnen unter Sprühen, Fluten und/oder Spritzen oder ähnlichen Aufbringverfahren von Flüssigkeiten aufgebracht. Das nicht von der Kunststoffbahn aufgenommene Behandlungsmittel wird aufgefangen und weiterverwendet, vorzugsweise im Kreislauf geführt. Dadurch gelingt es, das Behandlungsmittel ohne Verluste oder ohne wesentliche Verluste aufzubringen.

Gemäß der Erfindung wird in diesem Zusammenhang die Kunststoffbahn unter Narbgebung und/oder Oberflächendekoration verformt. Die Narbgebung der Kunststoffbahn erfolgt durch eine poröse, luftdurch-

4

lässige, vorzugsweise mikroporöse, luftdurchlässige Formoberfläche und/oder durch eine mikroskopisch feine Strukturen aufweisende Negativtiefziehform, während die Kunststoffbahn oder zumindestens die der Negativtiefziehform zugewandte Oberflächenschicht der Kunststoffbahn sich mindestens im thermoplastischen Temperaturbereich oder darüber (bis 260 °C) befindet, wobei zwischen der Werkzeugtemperatur und der Kunststoffbahn ein Temperaturunterschied von mehr als 30 °C, vorzugsweise mehr als 80 °C, eingehalten wird, so daß die Negativtiefziehform kälter als die zu verformende Bahn ist.

Gleichzeitig oder nachfolgend wird die gegenüber der Temperatur der Kunststoffbahn kalte oder kältere Behandlungsflüssigkeit auf die Rückseite der in der Negativtiefziehform befindlichen thermoverformten Kunststoffbahn aufgebracht, so daß eine merkliche Abkühlung erfolgt, die je nach Art, Menge des Behandlungsmittels, Temperaturhöhe der Kunststoffbahn bei der Verformung und dgl. zur Entformungstemperatur oder in die Nähe der Verformungstemperatur oder so erfolgen kann, daß eine zusätzliche Kühlung oder Abkühlung, z.B. mit einer Kühlflüssigkeit einer Kühlvorrichtung und dgl. nicht mehr oder nur in einem begrenzten Umfang erforderlich wird.

Die Temperatur der Behandlungsflüssigkeit liegt dabei zwischen 5 und 120 °C, vorzugsweise 15 bis 75 °C und es wird ein Temperaturunterschied zwischen der erhitzten Kunststoffbahn und der Behandlungsflüssigkeit von mehr als 30 °C, vorzugsweise mehr als 60 °C, eingehalten.

Nach einer bevorzugten Ausführungsform wird die Kunststoffbahn auf eine Temperatur innerhalb des thermoplastischen Bereiches oder etwas über der Temperatur des thermoplastischen Bereiches (maximal bis 260 °C) aufgeheizt oder die in diesem Temperaturbereich befindliche Kunststoffbahn verwendet und in einer sonst für das "Slush-Moulding-Verfahren" benutzten Tiefziehform im Negativtiefziehverfahren unter Einhaltung eines Temperaturunterschiedes zwischen dem Werkzeug und der Kunststoffbahn von mehr als 30 °C, vorzugsweise mehr als 80 °C, tiefgezogen und mit dem Behandlungsmittel behandelt, während der verformte Gegenstand noch in der Form ist.

Nach einer weiteren bevorzugten Ausführungsform wird die Kunststoffbahn im Negativtiefziehverfahren unter Narbgebung und/oder Oberflächendekoration verformt. Die Narbgebung und/oder Oberflächendekoration der Kunststoffbahn erfolgt dabei durch eine poröse, luftdurchlässige, vorzugsweise mikroporöse, luftdurchlässige Form-eine metall-, metallegierungs-, mikrometallpartikelhaltige, keramik-metall- und/oder keramik-mikrometallpartikelhaltige und/oder feinstteilige Füllstoffe enthaltende Schicht oder Oberfläche mit mikroskopisch feiner Struktur und mit einer durchschnittlichen Metallschichtdicke, Füllstoffpartikeldicke oder Metallpartikeldicke unter 80 $\mu$m, vorzugsweise unter 60 $\mu$m, aufweist, wobei zwischen der Werkzeugtemperatur und der Kunststoffolie, kunststoffhaltigen Bahn oder Kunststoffplatte, ein Temperaturunterschied von mehr als 30 °C, vorzugsweise mehr als 80 °C, eingehalten wird, um gleichzeitig oder nachfolgend ein Behandlungsmittel auf die Rückseite der thermoverformten Kunststoffbahn aufgebracht wird, die sich vorzugsweise noch in der Negativtiefziehform befindet.

Gemäß einer bevorzugten Ausführungsform des erfindungsgemäßen Verfahrens wird über die Oberfläche des herzustellenden Formteiles, Gegenstandes oder Urmodells des herzustellenden Formteiles oder Gegenstandes oder einer gleichmäßig oder annähernd gleichmäßig über dessen Oberfläche angeordneten Schicht oder Folie eine Formausfüllung, Schicht oder Ausguß, bestehend aus oder enthaltend einen Kunststoff, vorzugsweise auf der Basis von Silikonpolymeren, Silikonkautschuk oder anderen kunststoffbindemittelhaltigen Materialien, aufgebracht, die nach dem Aushärten entstandene (positive) Form (Matrize) abgetrennt oder abgezogen (nach einer Ausführungsform wird der Abguß aufgebogen, gegebenenfalls Hinterschnitte umgebogen oder aufgespreizt) und mit einer metall-, metallegierungs-, mikrometallegierungs-, mikrometallpartikelhaltigen oder metallhaltige Partikel enthaltenden Schicht oder Oberfläche mit einer durchschnittlichen Metallschichtdicke oder Metallpartikeldicke unter 80 $\mu$m, vorzugsweise unter 60 $\mu$m, versehen. Diese wird mit einem Kunststoff, kunststoffhaltigen oder bindemittelhaltigen Material unter Bildung luftdurchlässiger Strukturen oder Kanälen ausgegossen, ausgefüllt oder ausgespritzt, wobei die Oberfläche der Negativtiefziehform mikroporös, vorzugsweise mikroporös und luftdurchlässig ist. Die so erhaltene Negativform wird mit mindestens einer Vorrichtung zur Anlegung eines Vakuums oder Unterdruckes sowie gegebenenfalls Temperiersystem, vorzugsweise Kühlsystem oder Kühlmittelleitung, versehen und danach die Kunststoffolie, kunststoffhaltige Bahn oder Kunststoffplatte in der Negativtiefziehform tiefgezogen, wobei die Kunststoffolie, kunststoffhaltige Bahn oder Kunststoffplatte unter Mitverwendung eines Stempels oder einer ähnlichen Vorrichtung vorgeformt wird.

Gemäß der Erfindung wird bereits bei dem Vorstrecken oder Vorformen durch den Stempel eine Form hergestellt, die ganz oder in Teilbereichen dem herzustellenden Formteil oder Gegenstand entspricht, wobei bereits bei, während oder am Schluß des Vorstreckens oder Vorformens Temperatur-und/oder Druckunterschiede zwischen der Kunststoffolie, der kunststoffhaltigen Bahn oder der Kunststoffplatte und dem Werkzeug und/oder dem Stempel oder der Negativtiefziehform eingestellt werden.

Nach einer besonders wirtschaftlichen Ausführungsform wird die Kunststoffolie oder Kunststoffolienbahn oder Platte vom Extruder oder einer ähnlichen Plastifiziervorrichtung kommend unter Ausnutzung der bereits vorhandenen Wärmekapazität und gegebenenfalls durch zusätzliche Erwärmung auf die Temperatur im thermoplastischen Bereich gebracht oder gehalten oder die Kunststoffolie, -bahn oder Kunststoffplatte wird auf eine Temperatur im thermoplastischen Bereich vor Einbringung in die Negativtiefziehformvorrichtung vorerwärmt.

Der Stempel enthält eine Temperiervorrichtung, vorzugsweise Kühlvorrichtung zur Temperaturführung oder Temperatursteuerung, damit innerhalb des Verfahrens die zwischen der Kunststoffolie, -bahn oder -platte gewünschte Temperaturdifferenz auch bei dem Stempel eingestellt werden kann.

Nach einer bevorzugten Ausführungsform des Verfahrens weist der Stempel auch ganz oder teilweise Seitenwände oder Seitenwandbereiche des herzustellenden Formteiles oder Gegenstandes auf und unterstützt und trägt die Folie, Bahn oder Platte auch in diesen Bereichen vor Einbringen in die Negativtiefziehform, wobei er sie gleichzeitig vorformt.

Nach einer weiteren bevorzugten Ausführungsform wird die Entformung durch oder unter Mitverwendung eines Blas-oder Gasdruckes durchgeführt, wodurch eine Erleichterung der Entformung, insbesondere in kritischen Bereichen (Hinterschneidungen) ermöglicht wird.

Mit Hilfe des erfindungsgemäßen Verfahrens lassen sich die unterschiedlichsten thermoverformbaren Kunststofffolien, -bahnen oder Platten verarbeiten.

Nach einer Ausführungsform wird als Kunststofffolie ein Kunststofffolienlaminat eingesetzt, bei dem eine Schicht mit einem Treibmittel oder Treibmittelgemisch versehen ist, das bei dem Aufheizvorgang, bei dem Umformvorgang und/oder Narbgebungsvorgang aufschäumt oder aufzuschäumen beginnt, wobei die gebildete geschäumte Schicht als Dekor- und/oder Narbgebungsschicht oder als Polsterschicht auf der Rückseite der strukturierten und/oder genarbten Folie dient.

Die Erfindung betrifft weiterhin die Verwendung von dünnen Folien zur Herstellung von spannungsarmen Formteilen mit genauer Wiedergabe oder Reproduktion von form- und temperaturstabilen Oberflächenstrukturierungen von Modellen durch die Warmverformung dieser Folien in porösen Negativtiefziehwerkzeugen.

Mit Hilfe des erfindungsgemäßen Verfahrens können aus thermoverformten Kunststofffolien, Kunststoffbahnen oder Kunststoffplatten spannungsarme Oberflächenbeschichtungen hergestellt werden. Es gelingt eine Verbesserung der Griffreundlichkeit der Oberfläche zu erzielen. Weiterhin wird eine Verbesserung der optischen Eigenschaften durch Bedrucken der Oberflächenmaterialien erzielt, die nachfolgend innerhalb des Verfahrens mit Strukturierungen zusätzlich versehen werden können.

Die Erfindung betrifft weiterhin die Verwendung von dünnen Folien mit einer Dicke von 100 bis 1400 μm, vorzugsweise 200 bis 800 μm, zur Herstellung von Formteilen oder Gegenständen nach dem Negativtiefziehverfahren mit einer Schaumschicht oder Hinterschäumung zur Herstellung von Formteilen oder Gegenständen, deren Oberfläche vorzugsweise eine gute Narbstabilität auch bei Wärmelagerung aufweisen.

Schließlich betrifft die Erfindung auch die Verwendung von Folien mit einer Shore-D-Härte von 20 bis 60, vorzugsweise 25 bis 40, zur Herstellung von Formteilen oder Gegenständen nach dem Negativtiefziehverfahren mit einer Schaumschicht oder Hinterschäumung, deren Folienoberfläche vorzugsweise eine gute Narbstabilität bei Wärmelagerung aufweisen.

Im Rahmen des erfindungsgemäßen Verfahrens gelingt es, neben einer größeren Gestaltungsfreiheit der Form und der Oberfläche auch sehr gute Reproduzierbarkeit von Lederoptiken und spannungsarme Gegenstände und Formteile zu erzielen. Neben der verbesserten Oberflächenoptik sind somit auch eine verbesserte Alterung bei den spannungsarm verformten, negativtiefgezogenen Folien gemäß der Erfindung feststellbar.

In Kombination mit Verwendung emissionsarmer Folien oder Bahnen beziehungsweise emissionsarmer Kunststoffmischungen oder -legierungen zur Herstellung dieser Folien und Bahnen wird im Rahmen des erfindungsgemäßen Verfahrens bei den verwendeten niedrigen Werkzeug- und Stempeltemperaturen eine Verschließung der Feinst- oder Mikroporen des Negativtiefziehwerkzeuges weitgehend vermieden, wodurch bei der Verwendung dieser Werkzeuge im Rahmen des erfindungsgemäßen Verfahrens eine wesentliche höhere Stückzahl bei der Herstellung der Formteile oder Gegenstände bei insbesondere wesentlich höhere Stanzzeiten bei der Großserienherstellung oder Großserienfertigung möglich wird.

Die Vorrichtung zum Verformen von Formteilen oder Gegenständen aus Kunststoffolien oder Kunststoffplatten nach dem Negativziehverfahren, wird nach einer Ausführungsform so hergestellt, daß über die Oberfläche des herzustellenden Formteiles oder Gegenstandes oder Prototyp des herzustellenden Formteiles oder Gegenstandes eine Formausfüllung, Schicht oder Ausguß, bestehend aus oder enthaltend einen Kunststoff, vorzugsweise auf der Basis von Silikonpolymeren, Silikonkautschuk oder anderen kunststoffbindemittelhaltigen Materialien, aufgebracht, die nach dem Aushärten entstandene (positive) Form abgetrennt

EP 0 288 733 B1

oder abgezogen wird und mit einem Kunststoff, kunststoffhaltigen oder bindemittelhaltigen Material, ausgegossen, ausgefüllt oder ausgespritzt und mit einer metall-, metallegierungs-, mikrometallegierungs-, mikrometallpartikelhaltigen und keramik-metall-und/oder keramik-metallmikropartikelhaltige und/oder feinstteilige Füllstoffe enthaltenden Schicht oder Oberfläche mit einer durchschnittlichen Metallschichtdicke, Keramik-Metallpartikeldicke oder Metallpartikeldicke unter 80 μm, vorzugsweise unter 60 μm, versehen wird. Die so erhaltene Negativform wird mit mindestens einer Vorrichtung zur Anlegung eines Vakuums oder Unterdruckes und mit Heizvorrichtung ausgestattet und weist als Gegenwerkzeug oder Hilfswerkzeug einen Stempel oder eine ähnliche Vorrichtung auf.

Die Erfindung betrifft weiterhin eine Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren, bestehend aus einer Negativtiefziehform, die mit mindestens einer Zuleitung und/oder Vorrichtung zur Ausübung eines Druckunterschiedes, vorzugsweise Vakuum und/oder Unterdruck, ausgestattet ist und eine poröse, luftdurchlässige, vorzugsweise mikroporöse luftdurchlässige Formoberfläche besitzt, die eine metall-, metallegierungs-, mikrometallpartikelhaltige, keramik-metall-und/oder keramikmikrometallpartikelhaltige und/oder feinstteilige Füllstoffe enthaltende Schicht oder Oberfläche mit einer durchschnittlichen Metallschichtdicke oder Metallpartikeldicke unter 80 μm aufweist. Gemäß der Erfindung enthält der Stempel eine Tempeliervorrichtung zur Temperaturführung oder Temperatursteuerung, daß die Negativtiefziehform mit einer Einspann- oder Vorspannvorrichtung für die Kunststoffolie, kunststoffhaltige Bahn oder Kunststoffplatte und mit einem Kühlsystem versehen ist sowie in Kombination mit einer Zuleitungsvorrichtung und/oder Abzugsvorrichtung für die Kunststoffolie, -bahn oder Platte oder Transportvorrichtung für das hergestellte verformte Formteil oder den Gegenstand steht.

Der Stempel weist vorzugsweise die Form oder Formteilbereiche der Negativtiefziehform (in Positivform) auf.

Die Negativtiefziehform enthält mindestens eine Oberflächenschicht als Formoberfläche, die aus einem Bindemittel, einem nicht wärmeleitenden oder schlecht wärmeleitenden anorganisch-chemischen feinteiligen Füllstoff, vorzugsweise Keramikpulver, mit einer mittleren Teilchengröße unter 80 μm, vorzugsweise unter 50 μm, sowie einem feinteiligen Metallpulver, Metallegierungspulver, mikrometallpartikelhaltigen oder keramikmetallpartikelhaltigen, feinteiligen Pulver oder pulverförmigen Gemisch mit einer durchschnittlichen Partikeldicke unter 80 μm, vorzugsweise unter 60 μm, besteht oder diese enthält.

Das Gewichtsverhältnis des nicht wärmeleitenden oder schlecht wärmeleitenden anorganisch-chemischen Füllstoffes zu dem feinstteiligen Metallpulver, Metallegierungspulver, keramikmetall- oder -mikrometallpartikelhaltigen Pulver beträgt nach einer bevorzugten Ausführungsform 12 : 1 bis 1 : 12, vorzugsweise 5 : 1 bis 1 : 5.

Nach einer anderen Ausführungsform sind in der Oberflächenschicht der Negativtiefziehform zusätzlich Fasern aus anorganisch-chemischem Material, vorzugsweise Glasfasern, enthalten.

Nach einer weiteren Ausführungsform beträgt das Größenverhältnis (mittlere Teilchengröße) des anorganischchemisch feinteiligen Füllstoffes zu dem feinteiligen Metallpulver 3 : 1 bis 1 : 10, vorzugsweise 1 : 1 bis 1 : 3.

Die Negativtiefziehform und der Stempel sind vorzugsweise in einer mit Unterdruck oder mit Überdruck beaufschlagbaren Formkammer angeordnet. Die nach dem erfindungsgemäßen Verfahren erhaltenen Formteile oder Gegenstände aus thermoverformbaren Kunststoffolien, kunststoffhaltigen Bahnen oder Kunststoffplatten dienen bevorzugt als Innenverkleidungsoberflächen, -teile oder -gegenstände für Kraftfahrzeuge, so z.B. für Schalttafeln, Seitenwandteile und dgl.

Gemäß einer bevorzugten Ausführungsform werden tiefziehfähige, ungeschäumte Mono- oder Verbundfolien mit einer Dicke von 100 μm bis 1.400 μm, vorzugsweise 200 μm bis 1.000 μm, eingesetzt. Sie bestehen aus einer oder mehreren weichmacherfreien oder weichmacherarmen Schicht bzw. Schichten aus einer Mischung bzw. Legierung von Polyvinylchlorid (PVC) oder Vinylchlorid-Copolymerisat, Acrylnitril-Butadien- Copolymerisat (ABS) und/oder einem Plastifiziermittel oder Modifizierungsmittel, vorzugsweise auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder Mischungen oder Legierungen von Polyvinylchlorid (PVC) oder Vinylchlorid-Copolymerisat und Acrylnitril-Butadien-Copolymerisat (ABS) mit einem PVC-ABS-Gehalt von mehr als 40 Gew.-%, vorzugseise mehr als 50 Gew.-%, (bezogen auf 100 Gew.-Teile der Kunstharzmischung) mit einem anderen Kunstharz, vorzugsweise einem Acrylnitril-Copolymerisat oder einem Kunstharzgemisch auf der Basis von Acrylnitril-Copolymerisat, sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist.

7

Nach einer Ausführungsform wird die vorgenannte Folie als Unterfolie verwendet und zusätzlich eine weichmacherarme Oberfolie mit einer bestimmten Zusammensetzung. Die Oberfolie besitzt nach einer bevorzugten Ausführungsform eine Dicke von 100 bis 500 $\mu$m, vorzugsweis 120 bis 200 $\mu$m, und besteht aus Polyvinylchlorid sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder aus Mischungen von Polyvinylchlorid oder Vinylchlorid-Copolymerisat mit einem anderen Kunstharz, vorzugsweise einem Acrylnitril-Copolymerisat oder einem Kunstharzgemisch auf der Basis von Acrylnitril-Copolymerisat und/oder einem Plastifiziermittel oder Modifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist. Die Oberfolie kann auch als Unterfolie oder als Monofolie Verwendung finden.

Als Polyvinylchlorid für die Kunststoffbahn (Monofolie, Laminate oder coextrudierte Folien aus Unter- und Oberfolie) werden Vinylchloridhomopolymerisate eingesetzt. Es können jedoch auch Vinylchlorid-Copolymerisate, die durch Polymerisation mit bis zu 20 Gew.-%, vorzugsweise bis zu 10 Gew.-%, (bezogen auf 100 Gew.-% Vinylchlorid-Copolymerisat) anderer olefinisch ungesättigter Monomere hergestellt werden, Verwendung finden.

Als Vinylchloridpolymerisate werden bevorzugt Suspensions- und Blockpolymerisate eingesetzt. Es können jedoch auch Emulsionspolymerisate Verwendung finden. Als Polyolefine für die Folie können Polyethylen, Polypropylen sowie Copolymere von Ethylen und Propylen oder Legierungen von einem oder mehreren dieser Bestandteile eingesetzt werden.

Nach einer bevorzugten Ausführungsform besteht das Acrylnitril-Copolymerisat, das für die Kunststoffbahn eingesetzt wird, aus Styrol-Acrylnitril-Copolymerisat (SAN) und/oder Acrylnitril-Butadienharz (NBR).

Das Plastifiziermittel für die Kunststoffbahn bzw. Kunststoffmischung für die Kunststoffbahn besteht aus einem plastifizierenden Hochpolymeren mit polaren Gruppen, das mit dem Polyvinylchlorid ein Glaspunkt bildet, der zwischen dem Glaspunkt des PVC und dem Glaspunkt des Plastifiziermittels liegt.

Nach einer Ausführungsform besteht das Acrylnitril-Copolymerisat der Oberfolie aus Acrylnitril-Butadien-Copolymerisat (ABS) und/oder Styrol-Acrylnitril-Copolymerisat (SAN) und/oder Acrylnitril-Butadienharz (NBR).

Nach einer bevorzugten Ausführungsform beträgt der PVC-Gehalt der Oberfolie (bezogen auf die Kunstharzmischung bzw. -legierung, ohne Füllstoffe und Verarbeitungshilfsmittel) mehr als 50 Gew.-%, vorzugsweise mehr als 60 Gew.-%.

Der Gehalt des polare Gruppen aufweisenden Plastifiziermittels oder Plastifiziermittelgemisches in der Kunststoffbahn (Oberfolie und/oder Unterfolie) beträgt 5 - 30 Gew.-%, vorzugsweise 7 - 23 Gew.-%, (bezogen auf die Kunstharzmischung der Kunststoffbahn bzw. -folie - gerechnet ohne Verarbeitungshilfsmittel, Zusatzstoffe, Füllmittel und dgl.).

Nach einer zweckmäßigen Ausführungsform besteht das Plastifiziermittel aus einem Ethylen-Vinylacetat-Copolymerisat (EVA) mit polaren Gruppen und einem Vinylacetatgehalt von 60 - 80 Gew.-%, vorzugsweise 65 - 70 Gew.-%.

Nach einer anderen bevorzugten Ausführungsform besteht das Plastifiziermittel aus einem olefinischen Terpolymerisat mit statistisch verteilten Acetat- und Kohlenmonoxidgruppen. Es weist ein Molekulargewicht größer als 200.000 und eine Zusammensetzung von 50 - 79 Gew.-%, vorzugsweise 57 - 72 Gew.-% Ethylen, 35 - 15 Gew.-%, vorzugsweise 29 - 19 Gew.-% Vinylacetat und 15 - 6 Gew.-%, vorzugsweise 14 - 9 Gew.-% Kohlenmonoxid auf.

Nach einer anderen zweckmäßigen Ausführungsform wird als Plastifiziermittel ein Polycaprolacton (PCL) mit polaren Gruppen verwendet.

Weiterhin werden bevorzugt in der Kunststoffmischung aliphatische und/oder aromatische Polycarbonsäuren eingesetzt.

Die Kunststoffbahnen (Ober- und/oder Unterfolie oder Monofolie) enthalten cadmiumfreie Stabilisatoren, vorzugsweise Zinnstabilisatoren. Die Mischungen werden vorzugsweise unter Zusatz von Stabilisatoren, Antioxidation, Verarbeitungshilfsmitteln usw. hergestellt.

Nach einer bevorzugten Ausführungsform besteht bzw. bestehen die Unterfolie bzw. Unterfolien aus 20 - 50 Gew.-%, vorzugsweise 25 - 37 Gew.-%, Polyvinylchlorid und 60 - 20 Gew.-%, vorzugsweise 37 - 25 Gew.-%, Acrylnitril-Butadien-Copolymerisat (ABS), (bezogen auf die Kunstharzmischung bzw. -legierung ohne Verarbeitungshilfsmittel und Füllstoffe) sowie Restbestandteilen aus einem Plastifiziermittel oder Plastifiziermittelgemisch und Styrol-Acrylnitril-Copolymerisat (SAN) und/oder Acrylnitril-Butadienharz (NBA) und enthalten je 100 Gew.-Teile des Kunstharzgemisches zusätzlich 0,5 - 12 Gew.-Teile, vorzugsweise 1 - 7 Gew.-Teile, eines oder mehrerer Verarbeitungshilfsmittel sowie 0 - 40 Gew.-Teile, vorzugsweise 0,5 - 20 Gew.-Teile, eines Füllstoffes oder Füllstoffgemisches und/oder eines Mittels zum Schwerentflammbarmachen. Diese Rezeptur ist auch für Monofolien geeignet. Die Oberfolien enthalten bevorzugt 10 - 35 Gew.-%, vorzugsweise 18 - 30 Gew.-%, eines Plastifiziermittels oder Plastifiziermittelgemisches oder Modifiziermittels (bezogen auf die Kunstharzmischung bzw. -legierung ohne Verarbeitungshilfsmittel und Füllstoffe), sowie je 100 Gew.-Teile des Kunstharzgemisches 0,5 - 12 Gew.-Teile, vorzugsweise 1 - 7 Gew.-Teile, eines oder mehrerer Verarbeitungshilfsmittel. Ggf. können nach einer Ausführungsform je 100 Gew.-Teile der Kunststoffmischung 0 - 40 Gew.-Teile, vorzugsweise 0,5 - 20 Gew.-Teile, eines Füllstoffes oder Füllstoffgemisches und/oder eines Mittels zum Schwerentflammbarmachen zugefügt werden. Diese Mischung ist auch für Kunststoffbahnen oder Monofolien geeignet.

Die Kunststoffbahn oder die aus Unterfolie und Oberfolie bestehende Kunststoffolie ist nach einer Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen, überzogen.

Nach dem erfindungsgemäßen Verfahren und der erfindungsgemäßen Vorrichtung werden bevorzugt Formkörper oder Formkörperteile für Kraftfahrzeuginnenräume, Armaturenbretter von Kraftfahrzeugen sowie Sicherheitsabdekkungen, Seitenwände, Vorder- und Rückwandteile, Schalttafeln sowie Seitenpfosten und deren Sicherheitsabdekkungen für Kraftfahrzeuge und Flugzeuge hergestellt.

Zum Ausschäumen werden die an sich bekannten schäumbaren Kunststoffe, z. B. Polyurethanschaum, Polyolefinschaum und dgl. verwendet, denen je nach Art und Zusammensetzung der Kunststoffe bei der Herstellung Treibmittel, Mittel zum Schwerentflammbarmachen, Hilfs- und Zusatzstoffe vor dem Verschäumen zugesetzt werden.

Die Dicke des Schaumes richtet sich nach dem vorgesehenen Einsatzzweck und der äußeren Form des Formteiles.

Im Rahmen einer bevorzugten Ausführungsform wird eine (aus einer oder mehreren Schichten bestehende) Kunststoffbahn oder Kunststoffolie, insbesondere flexible thermoverformbare Kunststoffbahn oder flexible Tiefziehfolie, bestehend aus 90 - 25 Gew.-%, vorzugsweise 85 - 28 Gew.-%, eines Vinylchloridhomo-, -co-, -pfropfpolymerisates und/oder einer Legierung oder Mischung auf der Basis von Polyvinylchlorid und 10 - 75 Gew.-%, vorzugsweise 15 - 72 Gew.-% (bezogen auf 100 Gew.-% der Kunststoffmischung oder -legierung ohne Zusatzmittel, Füllstoffe, Stabilisatoren, Verarbeitungshilfsmittel), mindestens eines Modifizierungsmittels mit einer Glasumwandlungstemperatur von größer als 70 °C, vorzugsweise größer als 80 °C, und/oder mindestens eines Modifizierungsmittels und einer Glasumwandlungstemperatur von kleiner als 60 °C, vorzugsweise kleiner als 50 °C, sowie zusätzlich mindestens einem Stabilisierungsmittel oder Stabilisierungsmittelgemisch und gegebenenfalls Füllstoffen, Antioxidantien, Weichmacher, Gleitmittel, Verarbeitungshilfsmittel, Farbstoffe oder Farbpigmente, Flammschutzmittel oder andere Zusatzmittel oder Gemische von einem oder mehreren dieser Stoffe, zur Thermoverformung gemäß der Erfindung im Negativtiefziehverfahren eingesetzt.

Das Gewichtsverhältnis des Modifizierungsmittels oder Modifizierungsmittelgemisches mit einer Glasumwandlungstemperatur von größer als 70 °C, vorzugsweise größer als 80 °C, zu dem weiteren Modifizierungsmittel oder Modifizierungsmittelgemisch mit einer Glasumwandlungstemperatur von kleiner als 60 °C, vorzugsweise kleiner als 50 °C, beträgt 4 : 1 bis 1 : 4, vorzugsweise 3 : 1 bis 1 : 3.

Das Polymere oder das Polymergemisch (Modifizierungsmittel), das eine Glasumwandlungstemperatur von größer als 70 °C, vorzugsweise größer als 80 °C, besitzt, ist bevorzugt ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate, während das andere Polymere oder Polymergemisch (Modifizierungsmittel) ein Homo-, Pfropf-, Copolymerisat oder eine Kunststofflegierung oder -mischung mit polaren Gruppen mit einer Glasumwandlungstemperatur von kleiner als 60 °C, vorzugsweise kleiner als 50 °C, vorzugsweise Ethylen-Vinylacetat-Copolymerisat und/oder Ethylen-Vinylacetat-Kohlenmonoxid-Terpolymerisat, ist.

Nach einer weiteren bevorzugten Ausführungsform sind der Negativtiefziehform Düsen zugeordnet, deren Sprühvorrichtung oder Düsenöffnung im wesentlichen zur Negativtiefziehform gerichtet sind. Darüber hinaus ist eine Auffangwanne zum Auffangen der Behandlungsflüssigkeit vorgesehen.

**Beispiel 1:**

Eine Kunststoffolie mit einer Dicke von 500 $\mu$m wurde in die Negativtiefziehform gebracht. Zusammensetzung der Kunststoffolie:

70 Gew.-Teile     chloriertes Polyethylen
30 Gew.-Teile     Polyvinylchlorid mit einem K-Wert von 70

20 Gew.-Teile     eines Gemisches von Stabilisatoren, Verarbeitungshilfsmitteln, Gleitmitteln sowie Mittel zum Schwerentflammbarmachen und Pigmenten

Die Härte betrug gemessen nach Shore-A 76.

Vor Einbringung in die Negativtiefziehform wurde die Kunststoffolie auf eine Temperatur von 170 °C aufgeheizt. Die Temperatur der Negativtiefziehform betrug 64 °C.

Nach dem Verformen unter Mitverwendung eines Stempels der Formteile der Negativtiefziehform in Positivform aufwies, erfolgte eine Abkühlung mittels Wasser bis zur Entformungstemperatur von 35 °C.

**Beispiel 2:**

Eine Kunststoffolie mit einer Dicke von 500 μm wurde in die Negativtiefziehform gebracht. Die Kunststoffolie hatte folgende Zusammensetzung:

```
Suspensionspolyvinylchlorid (PVC)
K-Wert 70                                    25 Gew.-Teile


Acrylnitril-Butadien-Styrol-
Copolymerisat (ABS)                          25,25    "


Styrol-Acrylnitril-Copolymerisat
(SAN)                                        12,50    "


Acrylnitril-Acrylatharz (NAR)                 5,00    "


Olefinisches Terpolymerisat
mit statistisch verteilten
Acetat- und Kohlenmonoxid-
gruppen                                      24,00    "


Aromatischer Polycarbonsäure-
ester                                         8,00    "

                                     _____

                                            100,00    "


Stabilisatoren                                2,2     "


Gleitmittel und/oder
Antioxydantien                                2,5     "
```

Die Härte betrug gemessen nach Shore-D 36.

Vor Einbringung in die Negativtiefziehform wurde die Kunststoffolie auf eine Temperatur von 156 °C aufgeheizt. Die Temperatur der Negativtiefziehform betrug 52° C.

Nach dem Verformen unter Mitverwendung eines Stempels der Formteile der Negativtiefziehform in Positivform aufwies, erfolgte eine Abkühlung mittels Wasser bis zur Entformungstemperatur von 32 °C.

**Beispiel 3:**

Eine Kunststoffolie mit einer Dicke von 700 μm wurde in die Negativtiefziehform gebracht. Zusammensetzung der Kunststoffolie:

```
Suspensionspolyvinylchlorid (PVC)
K-Wert 70                              28 Gew.-Teile

Acrylnitril-Butadien-Styrol-
Copolymerisat (ABS)                    32    "

Acrylnitril-Acrylatharz (NAR)          15    "

Ethylen-Vinylacetat-Copoly-
merisat mit polaren Gruppen (EVA)      11    "

Aromatischer Polycarbonsäureester      14    "
                                     _____

                                      100    "

Stabilisatoren                          2    "

Gleitmittel und/oder
Antioxydantien                        2,6    "
```

Die Härte betrug gemessen nach Shore-D 37.

Vor Einbringung in die Negativtiefziehform wurde die Kunststoffolie auf eine Temperatur von 160 °C aufgeheizt. Die Temperatur der Negativtiefziehform betrug 56 °C.

Nach dem Verformen unter Mitverwendung eines Stempels, der Formteile der Negativtiefziehform in Positivform aufwies, erfolgte eine Abkühlung mittels Wasser bis zur Entformungstemperatur von 36 °C.

Nach einer weiteren bevorzugten Ausführungsform erfolgte nach dem Verformen unter Mitverwendung eines Stempels, der Formteile der Negativtiefziehform in Positivform aufwies, eine Abkühlung mittels einer Behandlungsflüssigkeit bis zur Temperatur von 45°C. Als Behandlungsmittel diente ein Sperrschichtmittel in flüssiger Form. Danach erfolgte weitere Abkühlung bis zur Entformung. Nach der Entformung wurde das Formteil hinterschäumt. Die Sperrschicht war auf der Basis von Methacrylsäuremethylester.

**Beispiel 4:**

Eine Kunststoffolie mit einer Dicke von 650 μm wurde in die Negativtiefziehform gebracht. Die Kunststoffolie hatte folgende Zusammensetzung.

50 Gew.-Teile     Ethylen-Vinylacetat-Kohlenmonoxid-Terpolymerisat

11

50 Gew.-Teile     Polvinylchlorid (E-PVC)

5,5 Gew.-Teile     eines Stabilisatorgemisches.

Die Härte betrug gemessen nach Shore-D 38.

Vor Einbringung in die Negativtiefziehform wurde die Kunststoffolie auf eine Temperatur von 168 °C aufgeheizt. Die Temperatur der Negativtiefziehform betrug 62 °C.

Nach dem Verformen unter Mitverwendung eines Stempels, der Formteile der Negativtiefziehform in Positivform aufwies, erfolgte eine Abkühlung mittels Wasser bis zur Entformungstemperatur von 37 °C.

**Beispiel 5:**

Eine Kunststoffolie mit einer Dicke von 600 $\mu$m wurde in die Negativtiefziehform gebracht. Die Kunststoffolie hatte folgende Zusammensetzung:

50 Gew.-Teile     Ethylen-Vinylacetat-Kohlenmonoxid-Terpolymerisat

50 Gew.-Teile     Polyvinylchlorid (E-PVC)

5,5 Gew.-Teile     eines Stabilisatorgemisches

3,8 Gew.-Teile     Treibmittelgemisch mit unterschiedlichen Zersetzungspunkten.

Vor Einbringung in die Negativtiefziehform wurde die Kunststoffolie auf eine Temperatur von 170 °C aufgeheizt. Die Temperatur der Negativtiefziehform betrug 62 °C. Das Treibmittelgemisch schäumte aus.

Nach dem Verformen unter Mitverwendung eines Stempels, der Formteile der Negativtiefziehform in Positivform aufwies, erfolgte eine Abkühlung mittels Wasser bis zur Entformungstemperatur von 37 °C.

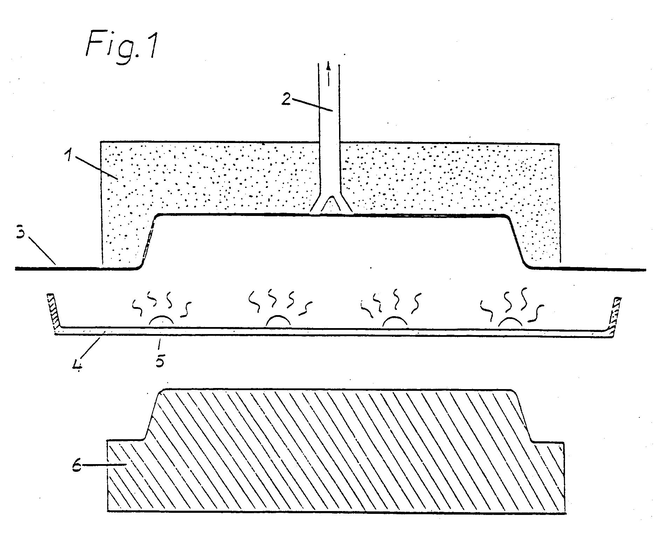

**Patentansprüche**

1. Verfahren zur Herstellung von Formteilen oder Gegenständen aus thermoverformbaren Kunststofffolien, thermoverformbaren kunststoffhaltigen Bahnen oder Kunststoffplatten nach dem Negativtiefziehverfahren, wobei die Kunststoffolie, kunststoffhaltige Bahn oder Kunststoffplatte unter Erwärmung in die Negativtiefziehform eingebracht und unter Narbgebung und/oder Oberflächendekoration unter Verwendung einer eine poröse, luftdurchlässige, vorzugsweise mikroporöse luftdurchlässige Formoberfläche aufweisenden Negativtiefziehform verformt wird, die eine metall-, metallegierungs-, mikrometallpartikelhaltige, keramik-metall-und/oder keramikmikrometallpartikelhaltige Schicht oder Oberfläche mit einer durchschnittlichen Metallschichtdicke oder Metallpartikeldicke unter 80 $\mu$m aufweist, dadurch gekennzeichnet, daß die eingespannte oder vorgespannte Kunststoffolie, kunststoffhaltigen Bahn oder Kunststoffplatte unter Mitverwendung eines Druckunterschiedes in die Negativtiefziehform eingebracht wird, wobei eine emissionsarme Kunststoffolie, kunststoffhaltige Bahn oder Kunststoffplatte verwendet wird, bei der der Gesamtgehalt der bei der Verformungstemperatur und Verflüchtigungszeit flüchtigen Bestandteile kleiner als 3 Gew.-% beträgt, wobei zwischen dem kälteren Werkzeug und der Kunststoffolie, kunststoffhaltigen Bahn oder Kunststoffplatte ein Temperaturunterschied von mehr als 30 °C eingehalten und nach der Thermoverformung abgekühlt wird.

2. Verfahren nach Anspruch 1, dadurch gekennzeichnet, daß die Kunststoffolie, kunststoffhaltige Bahn oder Kunststoffplatte vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 260 °C aufgeheizt wird und die Werkzeugtemperatur mit dem Temperaturunterschied, unter dem Schmelzpunkt, dem Schmelzbereich oder der Schmelztemperatur oder Erweichungstemperatur der Kunststoffolie, kunststoffhaltigen Bahn oder Kunststoffplatte eingestellt wird, der vorzugsweise mehr als 80 °C beträgt.

3. Verfahren nach Ansprüchen 1 und 2, dadurch gekennzeichnet, daß dünne Folien mit einer Dicke von
    100 bis 1400 $\mu$m, vorzugsweise
    200 bis 1000 $\mu$m,
unter Narb- und/oder Dekorgebung im Negativtiefziehverfahren und/oder Folien mit einer Shore-D-Härte von
    20 bis 60, vorzugsweise
    25 bis 40,
unter Narb- und/oder Dekorgebung im Negativtiefziehverfahren verformt werden, wobei die Kunststoffbahn, die von einer Abwicklungsvorrichtung als Kunststoffbahn kommt oder als Folienbahn bestimmter Abmessungen oder in plattenähnlicher Form zugeführt wird, in mindestens einer Vorwärm- und/oder Aufheizstation vorgewärmt und/oder auf eine Temperatur innerhalb des thermoplastischen Bereichs

12

aufgeheizt, über einen Spann- oder Abdichtungsrahmen der Negativtiefziehform gespannt, gegebenenfalls durch Vorblasen, Stützluft oder Stützgas gehalten, nachfolgend durch Erhöhung des Blasdruckes zu der Negativtiefziehform hin gewölbt und durch einen Stempel, der vorzugsweise die Form oder Formteilbereiche der Negativtiefziehform (in Positivform) aufweist, vorgeformt wird, in der Negativtiefziehform unter Narbgebung und/oder Oberflächendekoration thermoverformt und nachfolgend in die Negativtiefziehform abgekühlt, vorzugsweise unter Verwendung einer Temperaturdifferenz von

mehr als 50°C, vorzugsweise

mehr als 100°C,

gekühlt oder schockgekühlt wird.

4. Verfahren nach einem oder mehreren der Ansprüche 1 bis 3, dadurch gekennzeichnet, daß die Kunststofffolien mit einem wärmestabilen Polyolefin-, vorzugsweise Polypropylenschaum, mit einer Schaumschichtdicke von

0,5 bis 10 mm, vorzugsweise

1,5 bis 5 mm,

laminiert oder versehen werden, bevor sie in der Negativtiefziehform dreidimensional verformt und die Folienoberfläche genarbt und/oder oberflächenstrukturiert wird, wobei gegebenenfalls die Schaumschicht mit einem Träger oder einer Trägerschicht hinterlegt wird.

5. Verfahren nach einem oder mehreren der Ansprüche 1 bis 4, dadurch gekennzeichnet, daß die Kunststoffolie nach der dreidimensionalen Verformung, Narbung und/oder Oberflächenstrukturierung in dem Werkzeug nach oder während der Abkühlung entweder in der Form selbst oder in einem getrennten Arbeitsgang und/oder in einer anderen Form mit einem weichen bis mittelharten Schaum, vorzugsweise Polyurethanschaum, hinterschäumt wird, wobei gegebenenfalls bei der Hinterschäumung zusätzlich ein Träger oder eine Trägerschicht eingelegt wird.

6. Verfahren nach einem oder mehreren der Ansprüche 1 bis 5, dadurch gekennzeichnet, daß im Negativtiefziehverfahren Kunststofolien, kunststoffhaltige Bahnen oder Kunststoffplatten verformt werden, die aus Kunststoff, einer Kunststoffmischung oder Kunststofflegierung und bezogen auf 100 Gew.-Teile Kunststoff, Kunststoffmischung oder Kunststofflegierung

0,01 bis 15 Gew.-Teile, vorzugsweise

0,1 bis 6 Gew.-Teile,

Verarbeitungshilfsmittel sowie gegebenenfalls zusätzlich Füllstoffe, Farbpigmente, Farbstoffe oder anderen Zusatzstoffen bestehen oder diese enthalten.

7. Verfahren nach einem oder mehreren der Ansprüche 1 bis 6, dadurch gekennzeichnet, daß im Negativtiefziehverfahren emissionsarme Kunststofolien, kunststoffhaltige Bahnen oder Kunststoffplatten verformt werden, wobei der Gesamtgehalt der bei der Verformungstemperatur und Verformungszeit flüchtigen Bestandteile

kleiner als 2 Gew.-%,

ist.

8. Verfahren nach einem oder mehreren der Ansprüche 1 bis 7, dadurch gekennzeichnet, daß der Kunststoff, die Kunststoffmischung oder Kunststofflegierung der emissionsarmen Kunststofolien, kunststoffhaltigen Bahnen oder Kunststoffplatten aus Vinylchloridhomo- oder -copolymerisat, vorzugsweise in Kombination mit einem plastifizierenden und/oder elastomermodifizierten Thermoplasten, aus einem Olefinhomo-und/oder -copolymerisat, chlorierten Polyethylen, Ethylen-Propylen-Copolymerisat (EPM), Ethylen-Propylen-Dien-Polymerisat (EPDM), thermoplastischen Polyester, thermoplastischen Polyurethan, kautschukartigen Polyesterurethan und/oder Polyvinylidenfluorid besteht oder einen dieser Kunststoffe als Bestandteil enthält.

9. Verfahren nach einem oder mehreren der Ansprüche 1 bis 8, dadurch gekennzeichnet, daß der Kunststoff, die Kunststoffmischung oder die Kunststofflegierung aus Vinylchloridhomo- oder -copolymerisat als plastifizierenden und/oder elastomermodifizierten Thermoplasten Ethylen-Vinylacetat-Copolymerisat, vorzugsweise mit einem Acetatgehalt von größer als 60 Gew.-%, Ethylen-Vi-nylacetat-Kohlenmonoxid-Terpolymerisat (Elvaloy), einen thermoplastischen Kautschuk, vorzugsweise Ethylen-Propylen-Copolymerisat (EPM) und/oder Ethylen-Propylen-Dien-Terpolymerisat (EPDM), einen Kautschuk auf der Basis von Styrolpolymerisat oder Styrolblockpolymerisaten, chloriertes Polyethylen, ein thermoplastisches Polyurethan, ein thermoplastisches Polyesterharz, Olefinelastomer, Acrylat- und/oder Methacrylathomoco- und -pfropfpolymerisate, Nitrilkautschuk, Methylbutadien-Styrol-Polymerisat (MBS) sowie gegebenenfalls andere - Modifizierungsmittel, vorzugsweise Styrol-Acrylnitril-Copolymerisat (SAN), Acrylnitril-Butadienharz - (NBA), Acrylnitril-Butadien-Copolymerisat (ABS), ASA, AEN, ABS + MABS (Butadien-Styrol-Maleinsäure-Terpolymerisat), Mischungen mit Adipatcarbonmischestern und/oder aliphatische oder aromatische Carbonsäureester, vorzugsweise Trimilithsäureester, Adipate enthält.

10. Verfahren nach einem oder mehreren der Ansprüche 1 bis 9, dadurch gekennzeichnet, daß die Kunststofffolie, die kunststoffhaltige Bahn oder die Kunststoffplatte unter Mitverwendung eines Stempels oder einer ähnlichen Vorrichtung vorge-formt wird, wobei der Stempel die Form oder Formteilbereiche der Negativtiefziehform (in Positivform) aufweist und ein Stempel verwendet wird, der eine Temperiervorrichtung, vorzugsweise Kühlvorrichtung zur Temperaturführung oder Temperatursteuerung enthält.

11. Verfahren nach einem oder mehreren der Ansprüche 1 bis 10, dadurch gekennzeichnet, daß die in die Negativtiefziehform eingebrachte Kunststoffbahn durch die strukturierte, poröse und luftdurchlässige Oberfläche des Negativtiefziehwerkzeuges in der Oberfläche bzw. auf der Oberflächenschicht während der Thermoverformung strukturiert und/oder genarbt und nachfolgend oder gleichzeitig von der (nicht mit der Negativtiefziehform in Kontakt oder Verbindung stehenden) Rückseite der Kunststoffbahn her ein Behandlungsmittel auf die Kunststoffbahn aufgebracht wird.

12. Verfahren nach einem oder mehreren der Ansprüche 1 bis 11, dadurch gekennzeichnet, daß das Behandlungsmittel eine Kuhlflüssigkeit oder kaltes Gas ist, das die in der Negativtiefziehform befindliche Kunststoffbahn auf die Entformungstemperatur oder in die Nähe der Entformungstemperatur abkühlt oder schockkühlt.

13. Verfahren nach einem oder mehreren der Ansprüche 1 bis 12, dadurch gekennzeichnet, daß das Behandlungsmittel ein Haftvermittler, vorzugsweise eine Haftvermittlerflüssigkeit oder eine einen Haftvermittler enthaltende Flüssigkeit, ein Klebstoff, eine im Sprühverfahren aufzubringende Kunststoffschicht und/oder eine Sperrschicht ist.

14. Verfahren nach einem oder mehreren der Ansprüche 1 bis 13, dadurch gekennzeichnet, daß das flüssige Behandlungsmittel auf die Rückseite der in der Negativtiefziehform befindlichen thermoverformten Kunststoffbahn unter Sprühen, Fluten und/oder Spritzen aufgebracht und das nicht von der Kunststoffbahn aufgenommene Behandlungsmittel aufgefangen und weiterverwendet, vorzugsweise im Kreislauf geführt wird.

15. Verfahren nach einem oder mehreren der Ansprüche 1 bis 14, dadurch gekennzeichnet, daß die Temperatur der Behandlungsflüssigkeit zwischen
    5 und 120 °C, vorzugsweise
    15 bis 75 °C,
liegt und ein Temperaturunterschied zwischen der erhitzten Kunststoffbahn und der Behandlungsflüssigkeit von
    mehr als 30 °C, vorzugsweise
    mehr als 60 °C,
eingehalten wird.

16. Verfahren nach einem oder mehreren der Ansprüche 1 bis 15, dadurch gekennzeichnet, daß über die Oberfläche des herzustellenden Formteiles oder Gegenstandes oder Urmodells des herzustellenden Formteiles oder Gegenstandes oder einer gleichmäßig oder annähernd gleichmäßig über dessen Oberfläche angeordneten Schicht oder Folie eine Formausfüllung, Schicht oder Ausguß, bestehend aus oder enthaltend einen Kunststoff, vorzugsweise auf der Basis von Silikonpolymeren, Silikonkautschuk oder anderen kunststoffbindemittelhaltigen Materialien, aufgebracht, die nach dem Aushärten entstandene (positive) Form (Matrize) abgetrennt oder abgezogen wird und mit einer metall-, metallegierungs-, mikrometallegierungs-, mikrometallpartikelhaltigen oder metallhaltige Partikel enthaltenden Schicht oder Oberfläche mit einer durchschnittlichen Metallschichtdicke oder Metallpartikeldicke
    unter 60 $\mu$m,
versehen und mit einem Kunststoff, kunststoffhaltigen oder bindemittelhaltigen Material unter Bildung luftdurchlässiger Strukturen oder Kanälen ausgegossen, ausgefüllt oder ausgespritzt wird, wobei die Oberfläche der Negativtiefziehform mikroporös, vorzugsweise mikroporös und luftdurchlässig ist, daß die so erhaltene Negativtiefziehform mit mindestens einer Vorrichtung zur Anlegung eines Vakuums oder Unterdruckes sowie gegebenenfalls Temperiersystem, vorzugsweise Kühlsystem oder Kühlmittelleitung, versehen und danach die Kunststoffolie, kunststoffhaltige Bahn oder Kunststoffplatte in der Negativtiefziehform tiefgezogen wird, wobei die Kunststoffolie, kunststoffhaltige Bahn oder Kunststoffplatte unter Mitverwendung eines Stempels oder einer ähnlichen Vorrichtung vorgeformt wird.

17. Verfahren nach einem oder mehreren der Ansprüche 1 bis 16, dadurch gekennzeichnet, daß bereits bei dem Vorstrecken oder Vorformen durch den Stempel eine Form hergestellt wird, die ganz oder in Teilbereichen dem herzustellenden Formteil oder Gegenstand entspricht und bei dem Vorstrecken oder Vorformen Temperatur- und/oder Druckunterschiede zwischen der Kunststoffolie, der kunststoffhaltigen Bahn oder der Kunststoffplatte und dem Werkzeug und/oder dem Stempel oder der Negativtiefziehform eingestellt werden und/oder der Stempel zusätzlich bei der Verformung mit zur Temperaturführung oder Temperatursteuerung eingesetzt wird.

18. Verfahren nach einem oder mehreren der Ansprüche 1 bis 17, dadurch gekennzeichnet, daß die Kunststoffolie oder Kunststoffolienbahn oder Platte vom Extruder oder einer ähnlichen Plastifiziervorrichtung kommend unter Ausnutzung der bereits vorhandenen Wärmekapazität und gegebenenfalls durch zusätzliche Erwärmung auf die Temperatur im thermoplastischen Bereich gebracht oder gehalten oder die Kunststoffolie oder Kunststoffplatte auf eine Temperatur im thermoplastischen Bereich vor Einbringung in die Negativtiefziehformvorrichtung vorerwärmt wird.

19. Verfahren nach einem oder mehreren der Ansprüche 1 bis 18, dadurch gekennzeichnet, daß der Stempel ganz oder teilweise Seitenwände oder Seitenwandbereiche des herzustellenden Formteiles oder Gegenstandes aufweist und die Folie oder Platte auch in diesen Bereichen vor Einbringen in die Negativtiefziehform unterstützt, vorformt und trägt und/oder daß die Entformung durch oder unter Mitverwendung eines Blas- oder Gasdruckes erfolgt, wodurch eine Erleichterung der Entformung, insbesondere in kritischen Bereichen (Hinterschneidungen) ermöglicht wird.

20. Verfahren nach einem oder mehreren der Ansprüche 1 bis 19, dadurch gekennzeichnet, daß als Kunststoffolie ein Kunststoffolienlaminat eingesetzt wird, bei dem eine Schicht mit einem Treibmittel oder Treibmittelgemisch versehen ist, das bei dem Aufheizvorgang, bei dem Umformvorgang und/oder Narbgebungsvorgang aufschäumt oder aufzuschäumen beginnt, wobei die gebildete geschäumte Schicht als Dekor- und/oder Narbgebungsschicht oder als Polsterschicht auf der Rückseite der strukturierten und/oder genarbten Folie dient.

21. Verwendung von dünnen Folien zur Herstellung von spannungsarmen Formteilen mit genauer Wiedergabe oder Reproduktion von form- und temperaturstabilen Oberflächenstrukturierungen von Modellen durch die Warmverformung dieser Folien in porösen Negativtiefziehwerkzeugen entsprechend einem Verfahren nach einem oder mehreren der Ansprüche 1 bis 20.

22. Vorrichtung zur Herstellung von Formteilen oder Gegenständen aus thermoverformbaren Kunststofffolien, thermoverformbaren kunststoffhaltigen Bahnen oder Kunststoffplatten nach dem Negativtiefziehverfahren, bestehend aus einer Negativtiefziehform, die mit mindestens einer Zuleitung und/oder Vorrichtung zur Ausübung eines Druckunterschiedes, vorzugsweise Vakuum und/oder Unterdruck, ausgestattet ist und eine poröse, luftdurchlässige, vorzugsweise mikroporöse luftdurchlässige Formoberfläche besitzt, die eine metall-, metallegierungs-, mikrometallpartikelhaltige, keramik-metall- und/oder keramik-mikrometallpartikelhaltige und/oder feinstteilige Füllstoffe enthaltende Schicht oder Oberfläche mit einer durchschnittlichen Metallschichtdicke oder Metallpartikeldicke unter 80 $\mu$m aufweist, dadurch gekennzeichnet, daß der Stempel eine Temperiervorrichtung zur Temperaturführung oder Temperatursteuerung enthält, daß die Negativtiefziehform mit einer Einspann- oder Vorspannvorrichtung für die Kunststoffolie, kunststoffhaltige Bahn oder Kunststoffplatte und mit einem Kühlsystem versehen ist sowie in Kombination mit einer Zuleitungsvorrichtung und/oder Abzugsvorrichtung für die Kunststoffolie, -bahn oder Platte oder Transportvorrichtung für das hergestellte verformte Formteil oder den Gegenstand steht.

23. Vorrichtung nach Anspruch 22, dadurch gekennzeichnet, daß der Stempel die Form oder Formteilbereiche der Negativtiefziehform (in Positivform) aufweist.

24. Vorrichtung nach einem oder mehreren der Ansprüche 22 und 23, dadurch gekennzeichnet, daß die Negativtiefziehform mindestens eine Oberflächenschicht als Formoberfläche enthält, die aus einem Bindemittel, einem nicht wärmeleitenden oder schlecht wärmeleitenden anorganischen-chemischen feinteiligen Füllstoff, vorzugsweise Keramikpulver, mit einer mittleren Teilchengröße unter 80 $\mu$m, vorzugsweise unter 50 $\mu$m, sowie einem feinteiligen metall-, metallegierungs-, mikrometallpartikelhaltigen, keramikmetallpartikelhaltigen, feinteiligen Pulver oder pulverförmigen Gemisch mit einer durchschnittlichen Partikeldicke unter 80 $\mu$m, vorzugsweise unter 60 $\mu$m, besteht oder diese enthält.

25. Vorrichtung nach einem oder mehreren der Ansprüche 22 bis 24, dadurch gekennzeichnet, daß das Gewichtsverhältnis des nicht wärmeleitenden oder schlecht wärmeleitenden anorganisch-chemischen Füllstoffes zu dem feinstteiligen Metallpulver, Metallegierungspulver, keramikmetall- oder mikrometallpartikelhaltigen Pulver 12 : 1 bis 1 : 12, vorzugsweise 5 : 1 bis 1 : 5 beträgt.

26. Vorrichtung nach einem oder mehreren der Ansprüche 22 bis 25 dadurch gekennzeichnet, daß in der Oberflächenschicht zusätzlich Fasern aus anorganisch-chemischen Material, vorzugsweise Glasfasern enthalten sind und/oder die mittlere Teilchengröße des anorganisch-chemisch feinteiligen Füllstoffes zu dem feinteiligen Metallpulver im Verhältnis 3 : 1 bis 1 : 10, vorzugsweise 1 : 1 bis 1 : 3, steht.

27. Vorrichtung nach einem oder mehreren der Ansprüche 22 bis 26, dadurch gekennzeichnet, daß die Negativtiefziehform und der Stempel in einer mit Unterdruck oder mit Überdruck beaufschlagbaren Formkammer angeordnet sind.

28. Vorrichtung nach einem oder mehreren der Ansprüche 22 bis 27, dadurch gekennzeichnet, daß in einem Abstand zu der Negativtiefziehform Düsen zum Aufsprühen der Behandlungsflüssigkeit angeordnet sind, vorzugsweise bewegbar angeordnet sind.

29. Vorrichtung nach einem oder mehreren der Ansprüche 22 bis 28, dadurch gekennzeichent, daß eine Auffangwanne oder ein Auffangbecken für die versprühte Behandlungsflüssigkeit der Vorrichtung zugeordnet, vorzugsweise unterhalb der Negativtiefziehform und/oder unterhalb der Sprühdüsen angeordnet ist.

**Claims**

1. A method for producing moulded parts or objects from thermoforming plastic films, thermoforming plastic-containing webs or plastic plates using the negative deep-drawing process, in which the plastic film, plastic-containing web or plastic plate is introduced with heating into the negative deep-drawing mould and is shaped with embossing and/or surface decoration using a negative deep-drawing mould having a porous, air-permeable, preferably microporous, air-permeable, mould surface, which mould has a layer or surface containing metal particles, metal alloy particles, micrometal particles, ceramic-metal particles and/or ceramic-micrometal particles and having an average metal layer thickness or metal particle thickness of less than 80 $\mu$m, characterised in that the clamped or pre-stressed plastic film, plastic-containing web or plastic plate is introduced into the negative deep-drawing mould with the joint use of a pressure difference, with a low-emission plastic film, plastic-containing web or plastic plate being used in which the total content of the constituents which are volatile at the deformation temperature and in the volatilisation period is less than 3% by weight, with a temperature difference of more than 30°C being maintained between the colder mould and the plastic film, plastic-containing web or plastic plate and cooling being carried out after thermoforming.

2. A method according to Claim 1, characterised in that the plastic film, plastic-containing web or plastic plate is heated to a temperature in the vicinity of or above the melting range, melting point or to a temperature within the thermoplastic range of up to 260°C before introduction into the negative deep-drawing mould and the mould temperature with the temperature difference is set below the melting point, the melting range or the melting temperature or softening temperature of the plastic film, plastic-containing web or plastic plate, which is preferably more than 80°C.

3. A method according to Claims 1 and 2, characterised in that thin films having a thickness of

100 to 1400 $\mu$m, preferably
200 to 1000 $\mu$m,

are shaped with embossing and/or decoration in the negative deep-drawing process and/or films having a Shore D hardness of

20 to 60, preferably
25 to 40,

are shaped with embossing and/or decoration in the negative deep-drawing process, with the plastic web, which comes from an unrolling device as a plastic web or is supplied as a film web of particular dimensions or in plate-like form, is preheated in at least one preheating and/or heating station and/or is heated to a temperature within the thermoplastic range, is stretched over a clamping or sealing frame of the negative deep-drawing mould, optionally held by pre-blowing, supporting air or supporting gas, then curved towards the negative deep-drawing mould by increasing the blowing pressure, and is pre-shaped by a male plug which preferably has the shape or partial shaped regions of the negative deep-drawing mould (in the positive form), is thermoformed in the negative deep-drawing mould with embossing and/or surface decoration and then cooled into the negative deep-drawing mould, preferably cooled or shock-cooled using a temperature difference of

more than 50°C, preferably
more than 100°C.

4. A method according to one or more of Claims 1 to 3, characterised in that the plastic films are laminated or provided with a heat-stable polyolefin, preferably polypropylene, foam having a foam layer thickness off

0.5 to 10 mm, preferably
1.5 to 5 mm,

before they are three-dimensionally shaped in the negative deep-drawing mould and the film surface is embossed and/or surface-textured, with the foam layer optionally being backed with a backing or a backing layer.

5. A method according to one or more of Claims 1 to 4, characterised in that the plastic film after the three-dimensional shaping, embossing and/or surface-texturing in the mould after or during cooling is back-foamed either in the mould itself or in a separate operation and/or in another mould with a soft to medium-hard foam, preferably polyurethane foam, with optionally a backing or a backing layer being additionally inserted during back-foaming.

6. A method according to one or more of Claims 1 to 5, characterised in that in the negative deep-drawing process plastic films, plastic-containing webs or plastic plates are shaped which consist of or contain plastic, a plastics mixture or plastics alloy and, relative to 100 parts by weight plastic, plastics mixture or plastics alloy,

0.01 to 15 parts by weight, preferably
0.1 to 6 parts by weight,

processing aid and also optionally additionally fillers, colour pigments, dyes or other additives.

7. A method according to one or more of Claims 1 to 6, characterised in that in the negative deep-drawing process low-emission plastic films, plastic-containing webs or plastic plates are shaped, with the total content of the constituents which are volatile at the deformation temperature and deformation time being

less than 2% by weight.

8. A method according to one or more of Claims 1 to 7, characterised in that the plastic, the plastics mixture or plastics alloy of the low-emission plastic films, plastic-containing webs or plastic plates consists of vinyl chloride homopolymer or copolymer, preferably in combination with a plasticising and/or elastomer-modified thermoplastic, of an olefin homopolymer and/or copolymer, chlorinated polyethylene, ethylene-propylene copolymer (EPM), ethylene-propylene-diene copolymer (EPDM), thermoplastic polyester, thermoplastic polyurethane, rubber-like polyester urethane and/or polyvinylidene fluoride or contains one of these plastics as a constituent.

9. A method according to one or more of Claims 1 to 8, characterised in that the plastic, plastics mixture or the plastics alloy of vinyl chloride homopolymer or copolymer contains ethylene-vinyl acetate copolymer, preferably having an acetate content of more than 60% by weight, ethylene-vinyl acetate-carbon monoxide terpolymer (Elvaloy), a thermoplastic rubber, preferably ethylene-propylene copolymer (EPM) and/or ethylene-propylene-diene terpolymer (EPDM), a rubber on the basis of styrene polymer or styrene block polymers, chlorinated polyethylene, a thermoplastic polyurethane, a thermoplastic polyester resin, olefine elastomer, acrylate and/or methacrylate homopolymers, copolymers and graft polymers, nitrile rubber, methyl butadiene-styrene polymer (MBS) and also optionally other modifying agents, preferably styrene-acrylonitrile copolymer (SAN), acrylonitrile-butadiene resin copolymer (NBA), acrylonitrile-butadiene copolymer (ABS), ASA, AEN, ABS + MABS (butadiene-styrene-maleic acid terpolymer), mixtures with adipate-carboxylic mixed esters and/or aliphatic or aromatic carboxylic acid esters, preferably trimellitic acid esters, adipates, as a plasticising and/or elastomer-modified thermoplastic.

10. A method according to one or more of Claims 1 to 9, characterised in that the plastic film, the plastic-containing web or the plastic plate is preformed with the joint use of a male plug or a similar device, the male plug having the shape or partial shaped regions of the negative deep-drawing mould (in the positive form) and a male plug being used which contains a temperature control device, preferably cooling device, for guiding or controlling temperature.

11. A method according to one or more of Claims 1 to 10, characterised in that the plastic web introduced into the negative deep-drawing mould is textured or embossed in the surface or on the surface layer by the textured, porous and air-permeable surface of the negative deep-drawing mould during thermoforming and subsequently or simultaneously a treatment agent is applied to the plastic web from the rear side (not in contact with or joined to the negative deep-drawing mould) of the plastic web.

12. A method according to one or more of Claims 1 to 11, characterised in that the treatment agent is a cooling liquid or cold gas which cools or shock-cools the plastic web located in the negative deep-drawing mould to the mould release temperature or to within the vicinity of the mould release temperature.

13. A method according to one or more of Claims 1 to 12, characterised in that the treatment agent is an adhesion promoter, preferably an adhesion promoter liquid or a liquid containing an adhesion promoter, an adhesive, a plastic layer to be applied in a spraying operation and/or a blocking layer.

14. A method according to one or more of Claims 1 to 13, characterised in that the liquid treatment agent is applied to the rear side of the thermoformed plastic web located in the negative deep-drawing mould by spraying, flooding and/or atomising, and the treatment agent not taken up by the plastic web is collected and re-used, preferably recycled.

15. A method according to one or more of Claims 1 to 14, characterised in that the temperature of the treatment liquid is between
5 and 120°C, preferably
15 to 75°C,
and a temperature difference between the heated plastic web and the treatment liquid of
more than 30°C, preferably
more than 60°C,
is maintained.

16. A method according to one or more of Claims 1 to 15, characterised in that a mould filling, layer or poured substance, consisting of or containing a plastic, preferably on the basis of silicone polymers, silicone rubber or other materials containing plastic binder, is applied over the surface of the shaped part or item which is to be produced or the master pattern of the moulded part or item which is to be produced or of a layer or film arranged evenly or approximately evenly over the surface thereof, the (positive) mould (female die) which has resulted after curing is severed or removed and is provided with a layer or surface containing particles containing metal particles, metal alloy particles, micrometal alloy particles, micrometal particles or metal, which layer or surface has an average metal layer thickness or metal particle thickness of
less than 60 $\mu$m,

and is applied by pouring, filling or spraying with a plastic, plastic-containing or binder-containing material, forming air-permeable structures or channels, the surface of the negative deep-drawing mould being microporous, preferably microporous and air-permeable, that the resulting negative deep-drawing mould is provided with at least one device for applying a vacuum or underpressure and also optionally a temperature control system, preferably cooling system or coolant line, and then the plastic film, plastic-containing web or plastic plate is deep-drawn in the negative deep-drawing mould, the plastic film, plastic-containing web or plastic plate being preformed with the joint use of a male plug or a similar device.

17. A method according to one or more of Claims 1 to 16, characterised in that as early as during the pre-stretching or preforming by the male plug a shape is produced which corresponds entirely or in partial regions to the moulded part or item to be produced and during the pre-stretching or preforming operation temperature and/or pressure differences between the plastic film, plastic-containing web or plastic plate and the mould and/or the male plug or the negative deep-drawing mould are set and/or the male plug is additionally jointly used during forming for guiding or controlling temperature.

18. A method according to one or more of Claims 1 to 17, characterised in that the plastic film or plastic film web or plate, coming from the extruder or similar plasticising device, utilising the heat capacity already present, and optionally by additional heating is brought to or kept at the temperature in the thermoplastic range or the plastic film or plastic web is preheated to a temperature in the thermoplastic range before introduction into the negative deep-drawing mould apparatus.

19. A method according to one or more of Claims 1 to 18, characterised in that the male plug has completely or in part side walls or side wall regions of the moulded part or item which is to be produced and also supports, preforms and bears the film or plate in these regions before introduction into the negative deep-drawing mould and/or that mould release takes place by or with the joint use of a blowing pressure or gas pressure, which makes it possible to facilitate mould release, in particular in critical areas (undercuts).

20. A method according to one or more of Claims 1 to 19, characterised in that a plastic film laminate is used as the plastic film in which one layer is provided with an expanding agent or expanding agent mixture which foams up or begins to foam up during the heating operation, forming operation and/or embossing operation, the resulting foamed layer serving as a decorative and/or embossing layer or as a cushion layer on the rear side of the textured and/or embossed film.

21. The use of thin films for producing low-stress moulded parts with accurate rendering or reproduction of dimensionally stable and temperature-stable surface texturing of patterns by the hot-forming of these films in porous negative deep-drawing moulds, corresponding to a process according to one or more of Claims 1 to 20.

22. An apparatus for producing moulded parts or items from thermoforming plastic films, thermoforming plastic-containing webs or plastic plates according to the negative deep-drawing process, consisting of a negative deep-drawing mould which is equipped with at least one inlet line and/or device for exerting a pressure difference, preferably vacuum and/or underpressure, and has a porous air-permeable, preferably microporous air-permeable, mould surface which has a layer or surface containing metal particles, metal alloy particles, micrometal particles, ceramic-metal particles and/or ceramic-micrometal particles and/or very finely divided fillers, which layer or surface has an average metal layer thickness or metal particle thickness of less than 80 $\mu$m, characterised in that the male plug has a temperature control device for guiding or controlling temperature, that the negative deep-drawing mould is provided with a clamping or pre-stressing device for the plastic film, plastic-containing web or plastic plate and with a cooling system and also is in combination with a feed device and/or draw-off device for the plastic film, plastic web or plate or transport device for the shaped moulded part or the item produced.

23. An apparatus according to Claim 22, characterised in that the male plug has the shape or partial shaped regions of the negative deep-drawing mould (in the positive form).

24. An apparatus according to one or more of Claims 22 and 23, characterised in that the negative deep-drawing mould contains at least one surface layer as mould surface which consists of or contains a binder, a non-heat-conductive or poorly heat-conductive inorganic-chemical finely divided filler, preferably ceramic powder, with an average particle size of less than 80 $\mu$m, preferably less than 50 $\mu$m, and also a finely divided powder or powder-like mixture containing metal particles, metal alloy particles, micrometal particles, ceramic-metal particles, which powder or mixture has an average particle thickness of less than 80 $\mu$m, preferably less than 60 $\mu$m.

**25.** An apparatus according to one or more of Claims 22 to 24, characterised in that the weight ratio of the non-heat-conductive or poorly heat-conductive inorganic-chemical filler to the very finely divided metal powder, metal alloy powder, or powder containing ceramic-metal particles or micrometal particles is 12 : 1 to 1 : 12, preferably 5 : 1 to 1 : 5.

**26.** An apparatus according to one or more of Claims 22 to 25, characterised in that additionally fibres of inorganic-chemical material, preferably glass fibres, are contained in the surface layer and/or the average particle size of the inorganic-chemical, finely divided filler to the finely divided metal powder is in a ratio of 3 : 1 to 1 : 10, preferably 1 : 1 to 1 : 3.

**27.** An apparatus according to one or more of Claims 22 to 26, characterised in that the negative deep-drawing mould and the male plug are arranged in a moulding chamber which can be acted upon by underpressure or by overpressure.

**28.** An apparatus according to one or more of Claims 22 to 27, characterised in that nozzles for spraying on the treatment liquid are located, preferably movably located, at a distance from the negative deep-drawing mould.

**29.** An apparatus according to one or more of Claims 22 to 28, characterised in that a collecting bath or a collecting basin for the sprayed treatment liquid is associated with the apparatus, preferably is located beneath the negative deep-drawing mould and/or beneath the spray nozzles.

**Revendications**

**1.** Procédé de fabrication de pièces moulées ou d'objets à partir de feuilles plastiques thermoformables, de bandes contenant des matières plastiques ou de plaques plastiques thermoformables selon le procédé d'emboutissage en moule négatif, dans lequel la feuille, la bande ou la plaque plastique, de préférence, pincée ou précontrainte, est introduite dans le moule d'emboutissage négatif sous chauffage et y est moulée en produisant une surface grainée et/ou une décoration superficielle par l'emploi d'un moule d'emboutissage négatif présentant une surface de moulage poreuse, perméable à l'air, de préférence microporeuse et permeable à l'air, lequel moule comporte une couche ou une surface contenant un métal, un alliage métallique, des microparticules métalliques, des particules métallo-céramiques et/ou des microparticules métallo-céramiques, avec une épaisseur de couche métallique ou de particules métalliques moyenne inférieure à 80 microns, caractérisé en ce que la feuille plastique, la bande contenant des matières plastiques ou la plaque plastique, pincée ou précontrainte, est introduite dans le moule d'emboutissage négatif par l'emploi conjoint d'une différence de pression, en utilisant une feuille, une bande ou une plaque pauvre en émission, dans laquelle la teneur totale des composants volatils à la température de moulage et pendant le temps de volatilisation est inférieure à 3 % en poids, une différence de température de plus de 30°C étant maintenue entre l'outil plus froid et la feuille, la bande ou la plaque et le tout étant refroidi après le thermoformage.

**2.** Procédé selon la revendication 1, cractérisé en ce que la feuille plastique, la bande contenant une matière plastique ou la plaque plastique est chauffée, avant l'introduction dans le moule d'emboutissage négatif, à une température voisine du point de fusion ou supérieure à la plage de fusion, ou à une température qui se situe à l'intérieur de la plage thermoplastique jusqu'à 260°C, tandis que la température de l'outil est ajustée en dessous du point de fusion, de la plage de fusion ou de la température de fusion ou encore de la température de ramollissement de la feuille, de la bande ou de la plaque par une différence de température qui est de préférence supérieure à 80°C.

**3.** Procédé selon les revendications 1 et 2, caractérisé en ce que des feuilles minces d'une épaisseur de
100 à 1.400 microns, de préférence
200 à 1.000 microns,

sont moulées par le procédé d'emboutissage en moule négatif avec formation d'une surface grainée et/ou d'une décoration superficielle et/ou des feuilles d'une dureté Shore-D de

20 à 60, de préférence

25 à 40,

sont également moulées par le procédé d'emboutissage en moule négatif avec formation d'une surface grainée et/ou d'une décoration superficielle, la bande plastique, qui est issue d'un dispositif de déroulement sous forme de bande plastique ou est acheminée sous forme de feuille de dimensions déterminées ou sous forme similaire à des plaques, étant préchauffée dans au moins une station de préchauffage et/ou de chauffage et/ou chauffée à une température qui se situe dans la plage thermoplastique, contrainte sur un châssis de contrainte ou d'étanchéité du moule d'emboutissage négatif, soutenue éventuellement par présoufflage, par air ou gaz de support, ensuite bombée par augmentation de la pression de soufflage vers le moule d'emboutissage négatif et prémoulée par un moule mâle, qui présente de préférence la forme ou la forme générale du moule d'emboutissage négatif (sous forme positive), puis thermoformée dans le moule d'emboutissage négatif avec formation de grainage et/ou de décoration superficielle et finalement refroidie dans le moule d'emboutissage négatif, de préférence refroidie et trempée par mise en oeuvre d'une différence de température de

plus de 50°C, de préférence

plus de 100°C.

4. Procédé selon une ou plusieurs des revendications 1 à 3, caractérisé en ce que les feuilles plastiques sont revêtues ou pourvues d'une mousse de polyoléfine stable à la chaleur, de préférence d'une mousse de polypropylène, d'une épaisseur de couche mousse de

0,5 à 10 mm, de préférence

1,5 à 5 mm,

avant qu'elles ne soient moulées en trois dimensions dans le moule d'emboutissage négatif et que les surfaces des feuilles ne soient grainées et/ou texturées superficiellement, la couche de mousse étant éventuellement soutenue par un support ou par une couche de support.

5. Procédé selon une ou plusieurs des revendications 1 à 4, caractérisé en ce que la feuille plastique est, après le moulage en trois dimensions, le grainage et/ou la texturation superficielle dans l'outil, après ou pendant le refroidissement, dans le moule lui-même ou dans une phase de travail séparée et/ou dans un autre moule, revêtue au dos d'une mousse molle à mi-dure, de préférence d'une mousse de polyuréthane, un support ou une couche de support étant éventuellement inséré(e) en plus lors de la formation de cette mousse.

6. Procédé selon une ou plusieurs des revendications 1 à 5, caractérisé en ce qu'on moule par le procédé d'emboutissage négatif des feuilles plastiques, des bandes contenant des matières plastiques ou des plaques plastiques qui sont constituées d'une seule matière plastique, d'un mélange de matières plastiques ou d'un alliage de matières plastiques et, sur base de 100 parties en poids de la matière plastique, du mélange de matières plastiques ou de l'alliage de matières plastiques, de

0,01 à 15 parties en poids, de préférence

0,1 à 6 parties en poids,

d'agents de traitement auxiliaire, ainsi qu'éventuellement de charges, de pigments de couleur, de colorants ou d'autres substances auxiliaires supplémentaires, ou contiennent ceux-ci.

7. Procédé selon une ou plusieurs des revendications 1 à 6, caractérisé en ce qu'on moule dans le procédé d'emboutissage en moule négatif des feuilles plastiques, des bandes contenant des matières plastiques ou des plaques plastiques pauvres en émission telles que la teneur totale des composants volatils à la température de moulage et pendant le temps de moulage, soit

inférieure à 2 % en poids.

8. Procédé selon une ou plusieurs des revendications 1 à 7, caractérisé en ce que la matière plastique, le mélange de matières plastiques ou l'alliage de matières plastiques des feuilles plastiques, bandes contenant des matières plastiques ou plaques plastiques pauvres en émission est constitué(e) d'homo ou de copolymère de chlorure de vinyle, de préférence en combinaison avec une matière thermoplastique plastifiante et/ou modifiée par un élastomère, d'un homo et/ou d'un copolymère d'oléfines, de polyéthylène chloré, de copolymère d'éthylène et de propylène (EPM), de polymère d'éthylène, de propylène et de diène (EPDM), de polyester thermoplastique, de polyuréthane thermoplastique,

21

d'uréthane de polyester de type caoutchouc et/ou de fluorure de polyvinylidène, ou contient une de ces matières plastiques à titre de composant.

9. Procédé selon une ou plusieurs des revendications 1 à 8, caractérisé en ce que la matière plastique, le mélange de matières plastiques ou l'alliage de matières plastiques constitué(e) d'homo ou de copolymère de chlorure de vinyle contient, à titre de matières thermoplastiques plastifiantes et/ou modifiées par un élastomère, un copolymère d'éthylène et d'acétate de vinyle, de préférence avec une teneur en acétate supérieure à 60 % en poids, un terpolymère d'éthylène, de l'acétate de vinyle et de monoxyde de carbone (Elvaloy), un caoutchouc thermoplastique, de préférence un copolymère d'éthylène et de propylène (EPM), et/ou un terpolymère d'éthylène, de propylène et de diène (EPDM), un caoutchouc à base de polymère de styrène ou des polymères blocs de styrène, du polyéthylène chloré, du polyuréthane thermoplastique, des résines de polyester thermoplastiques, un élastomère d'oléfines, des homopolymères, des copolymères et des polymères greffés d'acrylate et/ou de méthacrylate, du caoutchouc de nitrile, un polymère de méthylbutadiène et de styrène (MBS) ainsi que, éventuellement, d'autres agents de modification, de préférence des copolymères de styrène et d'acrylonitrile (SAN), de la résine d'acrylonitrile et de butadiène (NBA), un copolymère d'acrylonitrile et de butadiène (ABS), du ASA, AEN, ABS et/ou MABS (terpolymère de butadiène, de styrène et d'acide maléique), des mélanges avec des esters mixtes d'adipate et d'acide carbonique et/ou d'esters d'acides carboniques aliphatiques ou aromatiques, de préférence, un ester d'acide triméllithique, des adipates.

10. Procédé selon une ou plusieurs des revendications 1 à 9, caractérisé en ce que la feuille plastique, la bande contenant des matières plastiques ou la plaque plastique est prémoulée par emploi conjoint d'un moule mâle ou d'un dispositif analogue, le moule mâle présentant la forme ou la forme générale du moule d'emboutissage négatif (sous forme positive) et le moule mâle utilisé contenant un dispositif d'équilibrage de la température, de préférence un dispositif de refroidissement pour guider ou commander la température.

11. Procédé selon une ou plusieurs des revendications 1 à 10, caractérisé en ce que la bande plastique introduite dans le moule d'emboutissage négatif par l'emploi conjoint d'une différence de température et d'un chauffage est texturée et/ou grainée par la surface texturée, poreuse et perméable à l'air de l'outil d'emboutissage négatif en surface ou dans la couche superficielle pendant le moulage par compression et, par la suite ou simultanément, un agent de traitement est appliqué à la bande plastique au verso (qui ne vient pas en contact ou en liaison avec le moule d'emboutissage négatif) de la bande plastique.

12. Procédé selon une ou plusieurs des revendications 1 à 11, caractérisé en ce que l'agent de traitement est un liquide de refroidissement ou un gaz froid qui refroidit ou trempe la bande plastique se trouvant dans le moule d'emboutissage négatif à la température de démoulage ou au voisinage de la température de démoulage.

13. Procédé selon une ou plusieurs des revendications 1 à 12, caractérisé en ce que l'agent de traitement est un agent adhésif, de préférence un liquide adhésif ou un liquide contenant un agent adhésif, une colle, une couche plastique à appliquer par pulvérisation et/ou une couche d'arrêt.

14. Procédé selon une ou plusieurs des revendications 1 à 13, caractérisé en ce que l'agent de traitement liquide est appliqué au verso des bandes plastiques thermoformées se trouvant dans le moule d'emboutissage négatif par pulvérisation, injection et/ou projection et l'agent de traitement non absorbé par la bande plastique sera récupéré et réutilisé, de préférence recyclé.

15. Procédé selon une ou plusieurs des revendication 1 à 14, caractérisé en ce que la température du liquide de traitement se situe en l'occurrence entre
5 et 120°C, de préférence
15 à 75°C,
et l'on maintient une différence de température entre la bande plastique chauffée et le liquide de traitement de
plus de 30°C,
de préférence plus de 60°C.

**16.** Procédé selon une ou plusieurs des revendications 1 à 15, caractérisé en ce que l'on applique sur la surface de la pièce moulée ou de l'objet à fabriquer ou encore du modèle d'origine de la pièce moulée ou de l'objet à fabriquer ou sur une couche ou feuille agencée de manière régulière ou presque régulière sur leur surface une charge de moulage, couche ou coulée, constituée - ou contenant - d'une matière plastique, de préférence à base de polymère de silicone, de caoutchouc de silicone ou d'autres matières contenant des agents liants de matières plastiques, le moule (matrice) produit (en positif) après durcissement est séparé ou retiré (selon une forme de réalisation, la pièce moulée est repliée, éventuellement les contre-dépouilles sont courbées ou écartées) et pourvu d'une couche ou d'une surface contenant du métal, des alliages métalliques, des micro-alliages métalliques, des microparticules métalliques ou des particules métalliques, d'une épaisseur de couche métallique ou d'une épaisseur de particules métalliques moyenne

inférieure à 60 microns,

et reçoit par coulée, comblement ou pulvérisation une matière plastique, une matière contenant de la matière plastique ou une matière contenant un agent liant en formant des structures perméables à l'air ou des canaux, la surface du moule d'emboutissage négatif étant microporeuse, de préférence microporeuse et perméable à l'air, en ce que le moule d'emboutissage négatif ainsi obtenu est doté d'au moins un dispositif permettant d'appliquer un vide ou une dépression ainsi que éventuellement d'un système d'équilibrage de température, de préférence un système de refroidissement ou une conduite d'agent réfrigérant et, ensuite, la feuille plastique, la bande contenant des matières plastiques ou la plaque plastique est emboutie dans le moule d'emboutissage négatif, la feuille, la bande ou la plaque étant préformée par application conjointe d'un moule mâle ou d'un dispositif analogue.

**17.** Procédé selon une ou plusieurs des revendications 1 à 16, caractérisé en ce que l'on fabrique, dès le dégrossissage ou le préformage par le moule mâle, une forme qui correspond totalement ou en partie à la pièce moulée ou à l'objet à fabriquer, et l'on règle au cours du dégrossissage ou du préformage, des différences de température et/ou de pression entre la feuille, la bande ou la plaque plastique et l'outil et/ou le moule mâle ou le moule d'emboutissage négatif et/ou le moule mâle est également utilisé lors du moulage pour guider ou commander la température.

**18.** Procédé selon une ou plusieurs des revendications 1 à 17, caractérisé en ce que la feuille plastique ou la bande plastique ou la plaque plastique est amenée ou maintenue par l'extrudeuse ou un dispositif de plastification analogue en tirant profit de la capacité thermique déjà disponible et éventuellement par chauffage supplémentaire, à la température de la plage thermoplastique ou bien la feuille plastique, la bande plastique ou la plaque plastique est préchauffée à une température de la plage thermoplastique avant introduction dans le dispositif d'emboutissage négatif.

**19.** Procédé selon une ou plusieurs des revendications 1 à 18, caractérisé en ce que le moule mâle présente également, en totalité ou en partie, des parois latérales ou des zones de parois latérales de la pièce moulée ou de l'objet à fabriquer et soutient, préforme et supporte la feuille, la bande ou la plaque également dans ces zones avant l'introduction dans le moule d'emboutissage négatif et/ou en ce que le démoulage est réalisé par l'emploi seul ou conjoint d'une pression de soufflage ou d'une pression de gaz qui permet de faciliter le démoulage, en particulier dans les zones critiques (contre-dépouilles).

**20.** Procédé selon une ou plusieurs des revendications 1 à 19, caractérisé en ce qu'on utilise comme feuille plastique un stratifié de matières plastiques, dans lequel une couche est pourvue d'un agent gonflant ou d'un mélange d'agents glonflants, qui forme une mousse ou commence à former une mousse lors de l'opération de chauffage, lors de l'opération de moulage et/ou lors de l'opération de grainage, la couche de mousse ainsi formée servant de couche décorative et/ou de couche grainée ou encore de couche de rembourrage au verso de la feuille texturée et/ou grainée.

**21.** Utilisation de feuilles minces pour la fabrication de pièces moulées pauvres en tensions avec une reproduction précise de textures sperficielles stables au moulage et à la température de modèles par moulage à chaud de ces feuilles dans des outils d'emboutissage négatif poreux par un procédé selon une ou plusieurs des revendications 1 à 20.

**22.** Dispositif de fabrication de pièces moulées ou d'objets à partir de feuilles plastiques thermoformables, de bandes contenant des matières plastiques thermoformables ou de plaques plastiques thermoformables selon le procédé d'emboutissage en moule négatif, le dispositif étant constitué d'un moule d'emboutissage négatif, qui est équipé d'au moins une conduite et/ou un dispositif permettant d'appliquer une différence de pression, de préférence un vide et/ou une dépression, et possède une surface de moulage poreuse, perméable à l'air, de préférence microporeuse et perméable à l'air, qui comporte une couche ou une surface contenant un métal, un alliage métallique, des particules métalliques microscopiques, des particules métallo-céramiques et/ou des particules métallo-céramiques microscopiques et/ou contenant des charges de très fine granulométrie, avec une épaisseur de couche métallique ou une épaisseur de particules métalliques moyenne inférieure à 80 microns, caractérisé en ce que le moule mâle comporte un dispositif d'équilibrage de température pour guider ou commander la température de telle sorte que le moule d'emboutissage négatif soit doté d'un dispositif de pinçage ou de précontrainte pour la feuille plastique, la bande contenant une matière plastique ou la plaque plastique et d'un système de refroidissement ainsi que, en combinaison, d'un dispositif d'introduction et/ou d'un dispositif d'extraction de la feuille, de la bande ou de la plaque plastique ou d'un dispositif de transport pour la pièce moulée fabriquée ou l'objet.

23. Dispositif selon le revendication 22, caractérisé en ce que Le moule mâle présente de préférence la forme ou la forme générale du moule d'emboutissage négatif (sous forme positive).

24. Dispositif selon une ou plusieurs des revendications 22 et 23, caractérisé en ce que le moule d'emboutissage négatif contient au moins une couche superficielle comme surface de moulage qui est constituée d'un agent liant, d'une charge organo-chimique de fine granulométrie ne conduisant pas ou conduisant peu la chaleur, de préférence une poudre céramique, avec une granulométrie moyenne inférieure à 80 microns, de préférence inférieure à 50 microns, ainsi que d'une poudre métallique de fine granulométrie, une poudre d'alliage métallique, une poudre de fine granulométrie contenant des particules microscopiques métalliques ou des particules métallo-céramique ou encore un mélange pulvérulant ayant un calibre particulaire moyen inférieur à 80 microns, de préférence inférieur à 60 microns, ou contient celles-ci.

25. Dispositif selon une ou plusieurs des revendications 22 à 24, caractérisé en ce que le rapport pondéral de la charge minérale conduisant peu ou pas la chaleur à la poudre métallique, la poudre d'alliage métalllique, la poudre de particules métallo-céramiques ou de particules métalliques microscopiques de très fine granulométrie est de 12 : 1 à 1 : 12, de préférence de 5 : 1 à 1 : 5.

26. Dispositif selon une ou plusieurs des revendications 22 à 25, caractérisé en ce qu'n outre des fibres de matière minérale, de préférence des fibres de verre sont contenues dans la couche superficielle et/ou le rapport entre la charge minérale de granulométrie moyenne et la poudre de fine granulométrie est de 3 : 1 à 1 : 10, de préférence de 1 : 1 à 3 : 1.

27. Dispositif selon une ou plusieurs des revendications 22 à 26, caractérisé en ce que le moule d'emboutissage négatif et le moule mâle sont de préférence agencés dans une chambre de moulage soumise à une dépression ou à une surpression.

28. Dispositif selon une ou plusieurs des revendications 22 à 27, caractérisé en ce que des buses sont agencées à distance du moule d'emboutissage négatif pour projeter le liquide de traitement, de préférence de façon à pouvoir se déplacer.

29. Dispositif selon une ou plusieurs des revendications 22 à 28, caractérisé en ce qu'une cuve réceptrice ou un bassin récepteur affecté(e) au liquide de traitement projeté est agencé(e) de préférence sous le moule d'emboutissage négatif et/ou sous les buses de projection.

Fig.1